# EUROPEAN PATENT SPECIFICATION

(11) **EP 2 993 557 B1**
(45) Date of publication and mention of the grant of the patent: **16.01.2019**
(21) Application number: 15157624.6
(22) Date of filing: 04.03.2015
(51) Int. Cl.: G06F 3/023, G06F 17/24, G06F 17/27, G06F 3/0488, G06F 3/01, G06K 9/00

(54) **Electronic device and method for processing handwriting**
Elektronische Vorrichtung und Verfahren zur Verarbeitung von Handschrift
Dispositif électronique et procédé de traitement d'écriture manuscrite

(30) Priority: 03.09.2014 JP 2014179032
(43) Date of publication of application: 09.03.2016
(73) Proprietor: Kabushiki Kaisha Toshiba, Minato-ku Tokyo 105-8001 (JP)
(72) Inventor: Kurita, Yukihiro, Tokyo 105-8001 (JP); Kakemura, Atsushi, Tokyo 105-8001 (JP); Ogawa, Takehiro, Tokyo 105-8001 (JP); Akashi, Aiko, Tokyo 105-8001 (JP)
(74) Representative: Henkel, Breuer & Partner

(56) References cited:
- EP-A2- 1 376 390
- WO-A1-2014/051134
- US-A1- 2006 146 028

## Description

Embodiments described herein relate generally to a technique for processing handwritten document data.

In the recent years, various electronic devices such as tablets, PDAs and smartphones have been developed. Most of these electronic devices comprise a touchscreen display for facilitating the input operation by the user.

Recently, electronic devices configured to deal with handwritten character strings have been also developed.

However, a technique for realizing smooth handwriting input is not considered in the current situation.

WO 2014/051134 A1 discloses a handwriting input support apparatus including a stroke input unit, a stroke storage unit, a stroke prediction unit, a prediction result display unit, and a settled result display unit. The stroke input unit inputs first strokes, one stroke set of which corresponds to one character or one symbol. The stroke storage unit stores second strokes, the one stroke set of which corresponds to the one character or one symbol. The stroke prediction unit predicts third strokes, the one stroke set of which corresponds to the one character or one symbol, by searching for the second strokes using the first strokes. The prediction result display unit displays the third strokes. The settled result display unit settles fourth strokes by an instruction given to the stroke set of the third stroke, and displays the fourth strokes together with the first strokes.

EP 1 376 390 A2 discloses a writing guide for a free form document editor.

US 2006/146028 A1 discloses a candidate list enhancement for predictive text input in electronic devices.

A general architecture that implements the various features of the embodiments will now be described with reference to the drawings. The drawings and the associated descriptions are provided to illustrate the embodiments and not to limit the scope of the invention.
FIG. 1 is an exemplary perspective view showing an outer appearance of an electronic device according to an embodiment.
FIG. 2 is an exemplary diagram showing coordinated behaviors of the electronic device of FIG. 1 and an external device.
FIG. 3 shows an example of a handwritten document written on a touchscreen display of the electronic device of FIG. 1.
FIG. 4 is an exemplary diagram shown for explaining time-series data generated by the electronic device of FIG. 1.
FIG. 5 is an exemplary block diagram showing a system configuration of the electronic device of FIG. 1.
FIG. 6 is an exemplary block diagram showing a function configuration of a handwritten note application program executed by the electronic device of FIG. 1.
FIG. 7 is an exemplary diagram showing a landscape user interface (edit view) displayed by the electronic device of FIG. 1.
FIG. 8 is an exemplary diagram showing a portrait user interface (edit view) displayed by the electronic device of FIG. 1.
FIG. 9 is an exemplary diagram showing a landscape user interface (edit view) in a full-screen mode.
FIG. 10 is an exemplary diagram showing a portrait user interface (edit view) in the full-screen mode.
FIG. 11 is an exemplary diagram shown for explaining a range selection process executed by the electronic device of FIG. 1.
FIG. 12 is an exemplary diagram shown for explaining a pen setting process executed by the electronic device of FIG. 1.
FIG. 13 is an exemplary diagram shown for explaining an auto-complete process in a search key input area.
FIG. 14 is an exemplary diagram showing a search result displayed by the electronic device of FIG. 1.
FIG. 15 is an exemplary diagram showing a landscape user interface (edit view) for a left-handed user.
FIG. 16 is an exemplary diagram shown for explaining a display style of an edit view area in an auto-complete mode (stroke suggestion mode).
FIG. 17 is an exemplary diagram shown for explaining that the right end of a handwriting candidate menu laterally extends as input of temporary strokes proceeds.
FIG. 18 is an exemplary diagram showing a state in which a list of many handwriting candidates is displayed by the handwriting candidate menu.
FIG. 19 is an exemplary diagram showing that the handwriting candidate menu is displayed above or under a writable area.
FIG. 20 is an exemplary diagram showing that a handwriting candidate which is previously displayed is displayed in a same position in the handwriting candidate menu as a position in which the handwriting candidate is previously displayed.
FIG. 21 is an exemplary diagram shown for explaining another display style of the edit view area in the auto-complete mode (stroke suggestion mode).
FIG. 22 is an exemplary diagram shown for explaining a user interface for editing a user dictionary.
FIG. 23 is shown for explaining a relationship between a landscape screen and a landscape/portrait page.
FIG. 24 is shown for explaining a relationship between a portrait screen and a landscape/portrait page.
FIG. 25 is an exemplary flowchart showing steps of an auto-complete process executed by the electronic device of FIG. 1.
FIG. 26 is an exemplary flowchart showing steps of a handwriting candidate menu display process executed by the electronic device of FIG. 1.
FIG. 27 is an exemplary flowchart showing a part of steps of a page display process executed by the electronic device of FIG. 1.
FIG. 28 is an exemplary flowchart showing the remaining part of the steps of the page display process executed by the electronic device of FIG. 1.

Various embodiments will be described hereinafter with reference to the accompanying drawings.

Accordingly, there is provided an electronic device as set out in independent claim 1, a method as set out in independent claim 6, and a computer program as set out in independent claim 11. Advantageous developments are defined in the dependent claims.

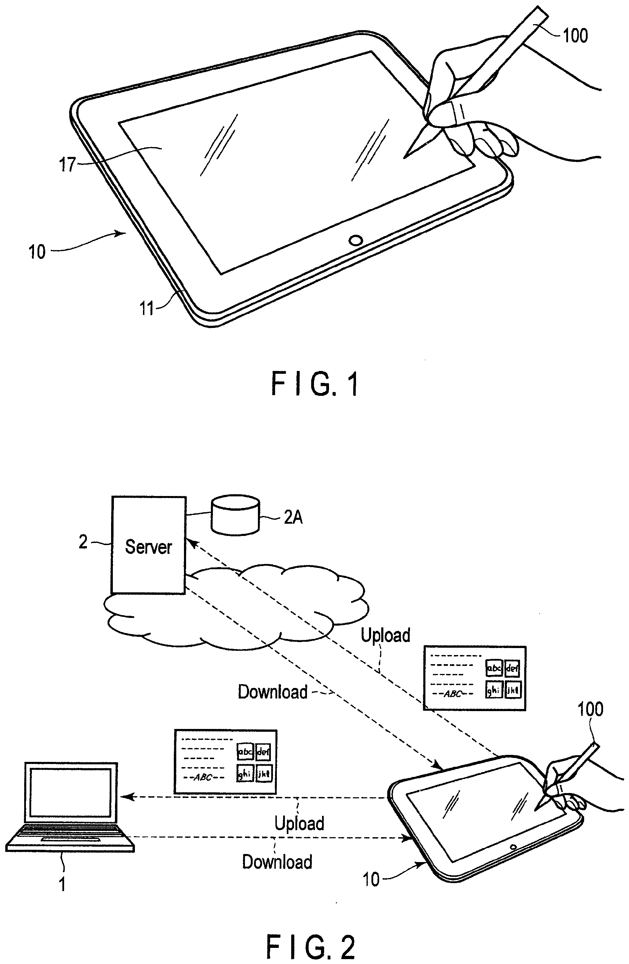

FIG. 1 is a perspective view showing an outer appearance of an electronic device according to an embodiment. The electronic device is, for example, a stylus-based portable electronic device which enables handwriting input by a stylus or a finger. The electronic device can be realized as a tablet computer, a notebook computer, a smartphone or a PDA, etc. This specification assumes that the electronic device is realized as a tablet computer 10. The tablet computer 10 is a portable electronic device which is also called a tablet or a slate computer. The tablet computer 10 comprises, as shown in FIG. 1, a main body 11 and a touchscreen display 17. The main body 11 comprises a housing having a thin-box shape. The touchscreen display 17 is attached such that the touchscreen display 17 overlaps with the upper surface of the main body 11.

A flat-panel display and a sensor are incorporated into the touchscreen display 17. The sensor is configured to detect the contact position on the screen of the flat-panel display with a stylus or a finger. The flat-panel display may be, for example, a liquid crystal display (LCD). As the sensor, for example, a capacitive touchpanel or an electromagnetic induction digitizer can be used. Hereinafter, this specification assumes that a touchpanel is incorporated into the touchscreen display 17 although the sensor is not limited to this example.

For example, the touchpanel is provided on the screen of the flat-panel display. The touchscreen display 17 is configured to detect a touch operation using a stylus 100 relative to the screen in addition to a touch operation using a finger relative to the screen. For example, the stylus 100 may be an active stylus or a passive stylus. Hereinafter, this specification assumes that an active stylus is employed as the stylus 100 although the stylus 100 is not limited to this example.

The user can perform a handwriting input operation on the touchscreen display 17 by using an external object (the stylus 100 or a finger). During the handwriting input operation, the locus of the move of the external object (the stylus 100 or a finger) on the screen is drawn in real time. In short, the handwriting is drawn in real time. The locus of the move of the external object in a period in which the external object contacts with the screen is equivalent to one stroke. A set of many strokes corresponding to handwritten characters or handwritten figures constitutes a handwritten document.

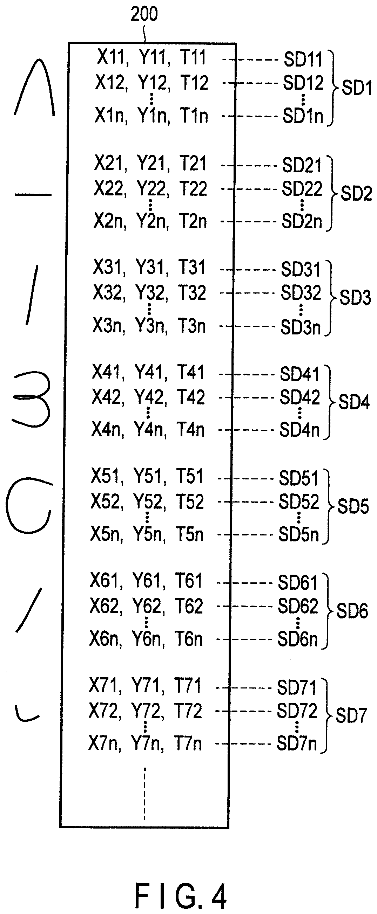

In the present embodiment, the handwritten document is stored in a storage medium as time-series data indicating the coordinate series of loci of strokes and the order relationship of the strokes. The handwritten document is not stored as image data. The detail of the time-series data is explained later with reference to FIG. 4. Briefly speaking, the time-series data includes a plurality of stroke data items corresponding to a plurality of strokes respectively. Each stroke data item corresponds to one stroke and includes a series of coordinate data items (time-series coordinates) each corresponding to a point on the stroke. The order of the stroke data items is equivalent to the order in which the strokes are made, or in short, the writing order.

The tablet computer 10 is configured to read arbitrary existing time-series data (handwritten document data) from the storage medium, and display the handwriting (a plurality of strokes) indicated by the handwritten document data on the screen. The tablet computer 10 has an editing function. The editing function is configured to delete or move an arbitrary stroke or an arbitrary handwritten character, etc., in the displayed handwritten document by using an eraser tool, a range selection tool and other various tools. The editing function is further configured to undo the histories of some handwriting operations.

The tablet computer 10 also has an auto-complete (stroke suggestion) function. The auto-complete function is a function for assisting the handwriting input operation of the user such that many character strings can be easily input in handwriting.

FIG. 2 shows an example of coordinated behaviors of the tablet computer 10 and an external device. The tablet computer 10 is configured to coordinate with a personal computer 1 and a cloud. The tablet computer 10 comprises a wireless communication device such as a wireless LAN, and is configured to wirelessly communicate with the personal computer 1. The tablet computer 10 is further configured to communicate with a server 2 on the Internet. The server 2 may be a server which performs an online storage service or other various types of cloud computing services.

The personal computer 1 comprises a storage device such as a hard disk drive (HDD). The tablet computer 10 is configured to transmit time-series data (a handwritten document) to the personal computer 1 over a network, and store (upload) the time-series data in the HDD of the personal computer 1.

In this manner, the tablet computer 10 can deal with many time-series data items (handwritten documents) or large volumes of time-series data (handwritten documents) even when the storage capacity in the tablet computer 10 is small.

The tablet computer 10 is further configured to read (download) one or more arbitrary handwritten documents stored in the HDD of the personal computer 1. The tablet computer 10 is configured to display the strokes indicated by the read handwritten documents on the screen of the touchscreen display 17 of the tablet computer 10.

The other party with which the tablet computer 10 communicates is not limited to the personal computer 1, and may be, as stated above, the server 2 on a cloud which offers a storage service, etc. The tablet computer 10 is configured to transmit a handwritten document to the server 2 over a network, and store (upload) the handwritten document in a storage device 2A of the server 2. The tablet computer 10 is further configured to read (download) an arbitrary handwritten document stored in the storage device 2A of the server 2. The tablet computer 10 is configured to display the strokes indicated by the read handwritten document on the screen of the touchscreen display 17 of the tablet computer 10.

Thus, in the present embodiment, the storage medium in which a handwritten document is stored may be any of the storage device of the tablet computer 10, the storage device of the personal computer 1 and the storage device of the server 2.

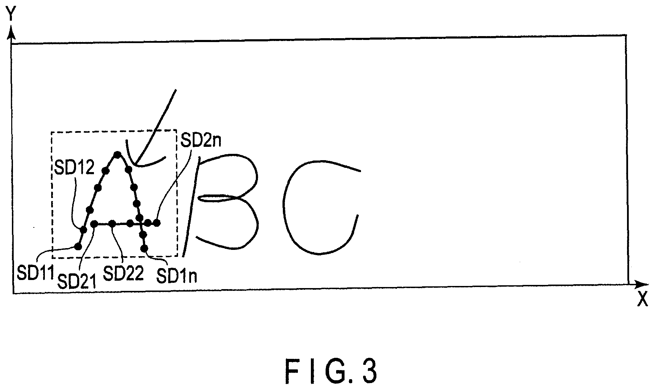

Now, this specification explains the relationship between strokes (characters, marks, figures (diagrams), tables and the like) made by the user and a handwritten document, referring to FIG. 3 and FIG. 4. FIG. 3 shows an example of a handwritten character string which is input on the touchscreen display 17 by using the stylus 100, etc.

In many cases, in a handwritten document, a different character or figure is written by hand on a character or figure which is written by hand in advance. FIG. 3 assumes the following case. A character string "ABC" is written by hand in the order of "A", "B" and "C". Subsequently, an arrow is written by hand in vicinity to the handwritten character "A".

The handwritten character "A" is shown by two strokes (the locus of "∧"-shape and the locus of "-"-shape) which are written by using the stylus 100, etc. For example, the locus of "∧"-shape which is firstly written by using the stylus 100 is sampled in real time at equal time intervals. Thus, time-series coordinates SD11, SD12, ... , SD1n of the stroke having the "∧"-shape are obtained. In a similar manner, the locus of "-"-shape which is written next by using the stylus 100 is sampled in real time at equal time intervals. Thus, time-series coordinates SD21, SD22, ... , SD2n of the stroke having the "-"-shape are obtained.

The handwritten character "B" is shown by two strokes which are written by using the stylus 100, etc. In short, the handwritten character "B" is shown by two loci. The handwritten character "C" is shown by one stroke which is written by using the stylus 100, etc. In short, the handwritten character "C" is shown by one locus. The handwritten arrow is shown by two strokes which are written by using the stylus 100, etc. In short, the handwritten arrow is shown by two loci.

FIG. 4 shows time-series data 200 corresponding to the handwritten character string of FIG. 3. The time-series data 200 includes a plurality of stroke data items SD1, SD2, ... , SD7. In the time-series data 200, stroke data items SD1, SD2, ... , SD7 are arranged in the writing order, or in other words, in chronological order in which the plurality of strokes are written by hand.

In the time-series data 200, the initial two stroke data items SD1 and SD2 show the two strokes of the handwritten character "A". The third and fourth stroke data items SD3 and SD4 show the two strokes constituting the handwritten character "B". The fifth stroke data item SD5 shows the stroke constituting the handwritten character "C". The sixth and seventh stroke data items SD6 and SD7 show the two strokes constituting the handwritten arrow.

Each stroke data item includes a plurality of coordinates corresponding to a plurality of points on the locus of one stroke, respectively. In each stroke data item, a plurality of coordinates are arranged in chorological order in which the stroke is written. For example, with regard to the handwritten character "A", stroke data item SD1 includes a series of coordinate data items (time-series coordinates) corresponding to points on the locus of the stroke having the "∧"-shape of the handwritten character "A", respectively. In short, stroke data item SD1 includes n coordinate data items SD11, SD12, ... , SD1n. Stroke data item SD2 includes a series of coordinate data items corresponding to points on the locus of the stroke having the "-"-shape of the handwritten character "A", respectively. In short, stroke data item SD2 includes n coordinate data items SD21, SD22, ... , SD2n. The number of coordinate data items may differ depending on the stroke data item.

Each coordinate data item indicates the X coordinate and the Y coordinate which correspond to one point on the corresponding locus. For example, coordinate data item SD11 indicates the X coordinate (X11) and the Y coordinate (Y11) of the starting point of the stroke having the "A"-shape. SD1n indicates the X coordinate (X1n) and the Y coordinate (Y1n) of the end point of the stroke having the "A"-shape.

Each coordinate data item may include timestamp data T corresponding to the time point at which the point corresponding to the coordinate is written by hand. The handwritten time point may be either an absolute time (for example, year/month/day/hour/minute/second) or a relative time based on a time point. For example, the absolute time (for example, year/month/day/hour/minute/second) which is the starting time of handwriting of a stroke may be added as timestamp data to each stroke data item. Further, the relative time indicating the difference from the absolute time may be added as timestamp data T to each coordinate data item of the stroke data item.

Moreover, data Z indicating the writing pressure may be added to each coordinate data item.

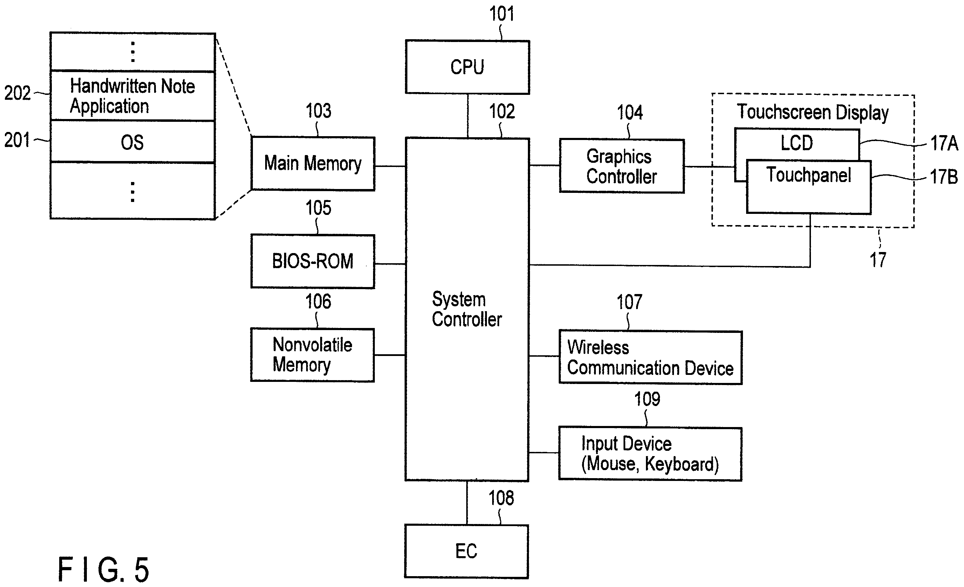

FIG. 5 shows a system configuration of the tablet computer 10.

The tablet computer 10 comprises, as shown in FIG. 5, a CPU 101, a system controller 102, a main memory 103, a graphics controller 104, a BIOS-ROM 105, a nonvolatile memory 106, a wireless communication device 107, an embedded controller (EC) 108 and the like.

The CPU 101 is a processor configured to control the operations of various modules in the tablet computer 10. The processor includes a processing circuitry. The CPU 101 executes various computer programs loaded to the main memory 103 from the nonvolatile memory 106 which is a storage device. These programs include an operating system (OS) 201 and various application programs. The application programs include a handwritten note application program 202. The handwritten note application program 202 is a digital notebook application by which a note can be taken down. The handwritten note application program 202 has a function for creating and displaying the above-described handwritten document, a function for editing the handwritten document, an auto-complete function and the like.

The CPU 101 executes a basic input/output system (BIOS) stored in the BIOS-ROM 105. The BIOS is a program for hardware control.

The system controller 102 is a device configured to connect a local bus of the CPU 101 and various components. The system controller 102 comprises a built-in memory controller configured to control the access to the main memory 103. The system controller 102 has a function for performing communication with the graphics controller 104 through a serial bus having a PCI EXPRESS standard.

The graphics controller 104 is a display controller configured to control an LCD 17A used as a display monitor of the tablet computer 10. The display controller includes a display control circuitry. The touchscreen display 17 (the touchscreen display 17/the screen of the LCD 17A) including the LCD 17A has a rectangular shape including long sides and short sides.

A display signal produced by the graphics controller 104 is transmitted to the LCD 17A. The LCD 17A displays a screen image based on the display signal. A touchpanel 17B is provided on the LCD 17A.

The wireless communication device 107 is a device configured to perform wireless communication by using a wireless LAN or 3G mobile communication, etc. The EC 108 is a one-chip microcomputer including an embedded controller for power management. The EC 108 has a function for turning the tablet computer 10 on or off in accordance with the operation of the power button by the user.

The tablet computer 10 may comprise a peripheral interface for communication with an input device 109 (for example, a mouse or a keyboard).

### <Characteristics of Handwritten Note Application Program 202>

This specification explains some characteristics of the handwritten note application program 202.

### <Basic Characteristics of Application>

The handwritten note application program 202 automatically saves the page the user is editing on a periodic basis. When the handwritten note application program 202 is suspended or exited, the handwritten note application program 202 automatically saves the page the user is editing.

The handwritten note application program 202 supports a plurality of languages. The handwritten note application program 202 uses the language which is set in the OS setting.

The handwritten note application program 202 includes a character recognition engine. The character recognition engine supports the Japanese language, the English language, the Korean language, the Russian language, the Chinese language and other various languages.

The handwritten note application program 202 has a screen rotation function. The handwritten note application program 202 supports two types of pages (stroke input pages) which are a landscape page and a portrait page. A page is an area in which a handwritten stroke can be input. A landscape page is a laterally-oriented page, and includes a border which is horizontally long. A landscape page is a rectangular area which is laterally long. The rectangular area is a range in which a handwritten stroke can be input.

A portrait page is a longitudinally-oriented page, and includes a border which is perpendicularly long. A portrait page is a rectangular area which is longitudinally long. The rectangular area is a range in which a handwritten stroke can be input.

The handwritten note application program 202 supports a multiuser environment. A user management function relies on the OS. The handwritten note application program 202 may not have its own user management function. In this case, page data (notebook data) is placed in the user local data area prepared by the OS. This means that the notebook data of one user is independent from the other users.

The handwritten note application program 202 supports a multiple window layout. In the multiple window layout, for example, the window of the handwritten note application program 202 is displayed on the half (for example, the left side) of the screen. On the remaining half (for example, the right side) of the screen, the window of another application program is displayed.

The handwritten note application program 202 has a function for printing the current page (the page the user is editing). When this printing function is invoked from an application bar or a charm, the current page is printed on one page.

The handwritten note application program 202 can be manipulated by a keyboard. The handwritten note application program 202 supports the following basic shortcut keys conducted on the edit view which enables page viewing or editing.
Copy:Ctrl+C
Paste: Ctrl+V
Cut: Ctrl+X
Delete: Delete
Undo:Ctrl+Z
Redo:Ctrl+Y
Move:Arrows

The handwritten note application program 202 can be manipulated by a mouse.

The handwritten note application program 202 can be manipulated by a touch or a stylus. The term "touch" refers to a finger gesture.

Now, this specification explains the input hardware environment of the handwritten note application program 202.

The handwritten note application program 202 requires at least one of the following devices to operate: a stylus device (for example, an active stylus); a touchpanel (or a digitizer); a mouse; and a keyboard.

The relationship between the types of input hardware environment and the behaviors of the handwritten note application program 202 is shown below.

Input hardware environment type 1: This input hardware environment is compatible with a product in which a stylus device and a touchpanel are present. The handwritten note application program 202 is configured to draw a stroke by a stylus. The handwritten note application program 202 is configured to draw a stroke by a touch or a mouse in a touch input mode. The touch input mode is a mode for drawing a stroke by a finger or a mouse. The touch input mode is turned off in the default setting.

Input hardware environment type 2: This input hardware environment is compatible with a product in which a stylus device is not present and a touchpanel is present. The handwritten note application program 202 is configured to draw a stroke by a touch or a mouse in a touch input mode. The touch input mode is turned on in the default setting. The touch input mode cannot be set to be turned off.

Input hardware environment type 3: This input hardware environment is compatible with a product in which neither a stylus device nor a touchpanel is present. The handwritten note application program 202 is configured to draw a stroke by a mouse in a touch input mode. The touch input mode is turned on in the default setting. The touch input mode cannot be set to be turned off.

Apart from the above types, for example, it is possible to use an input hardware environment type compatible with a product comprising a stylus (for example, a digitizer stylus), a digitizer and a touchpanel. In this input hardware environment, the handwritten note application program 202 is configured to draw a stroke by a stylus. The handwritten note application program 202 is configured to draw a stroke by a touch or a mouse in a touch input mode. The touch input mode is a mode for drawing a stroke by a finger or a mouse. The touch input mode is turned off in the default setting.

This specification explains the setting of a side button of a stylus. A standard stylus (for example, an active stylus) comprises an eraser button and a side button. Button actions are defined by the OS system. The handwritten note application program 202 allocates button behaviors as follows.

Side button (Right-mouse-click button): Selection of pen for drawing
Eraser button: Eraser

A stylus may comprise two side buttons. In this case, the handwritten note application program 202 is configured to allocate button behaviors as follows.
Upper side button: Right-mouse-click button
Lower side button: Eraser button

The handwritten note application program 202 is configured to set a stylus button (a side button or an eraser button) to be turned on or off.

Now, this specification explains the saving of user interface (UI) states. The handwritten note application program 202 is configured to save some UI states, and carry on the UI states to the next lunch. The UI states to be saved are: a pen setting (color, width, etc.); an eraser setting (large or small); a selection tool setting (a rectangular frame or a free frame); and a full-screen mode/normal mode.

### <Page Input/Editing Function>

A page input/editing function is explained below.

The handwritten note application program 202 supports the following pens: fountain pen; pencil; ballpoint pen; marker; and fiber-tip (felt) pen.

For any pen, the transparency of a line to be drawn can be set. With some pens, the width of a line to be drawn changes in accordance with the writing pressure. With other pens, the transparency of a line to be drawn changes in accordance with the writing pressure.

For example, the fountain pen is sensitive to the writing pressure. With the fountain pen, the width of a line changes in accordance with the writing pressure. The transparency of a line also changes in accordance with the writing pressure.

The pencil slowly reacts to the writing pressure. With the pencil, the width of a line slowly changes in accordance with the writing pressure. The transparency of a line also slowly changes in accordance with the writing pressure.

The ballpoint pen does not react to the writing pressure.

The marker pen slowly reacts to the writing pressure with regard to the transparency only.

The felt pen slowly reacts to the writing pressure with regard to the width only.

The handwritten note application program 202 is configured to input a stroke in handwriting by an active pen. The handwritten note application program 202 is configured to erase strokes per stroke unit. The eraser size can be selected from large and small sizes. The default of the eraser size may be large.

The handwritten note application program 202 is configured to select an object (a stroke or an image) on a page by a selection (range selection) tool.

The handwritten note application program 202 supports a copy/cut/paste function. The copy/cut/paste function uses a clipboard function of the OS. The handwritten note application program 202 is configured to execute four types of copies described below.

Copy: The handwritten note application program 202 copies (stores) the selected object as stroke data in the clipboard. The stroke data includes the coordinates of a plurality of points corresponding to each stroke. The application in which the stroke data should be pasted is the handwritten note application program 202.

Copy as an image: The handwritten note application program 202 copies (stores) the selected object as an image (image data) in the clipboard. The image is, for example, a bit map. The handwritten note application program 202 converts the selected object into image data, and copies (stores) the image data in the clipboard. The application in which the image data should be pasted is an application dealing with images.

Copy as Office data: The handwritten note application program 202 copies (stores) the selected object as a formatted object in the clipboard. The formatted object is an object having a data format which can be used by other application programs. The handwritten note application program 202 converts the selected object into a formatted object, and copies (stores) the formatted object in the clipboard. The application in which the object should be pasted is a presentation application or a word processing application. The process for converting the selected object into a formatted object is performed by using character recognition, figure (shape) recognition and table recognition. In the character recognition, strokes corresponding to a handwritten character string are converted into recognized text. In the figure recognition, strokes corresponding to a handwritten figure are converted into a formatted figure (shape) object. In the table recognition, strokes corresponding to a handwritten table are converted into a formatted table object.

Copy as text: The handwritten note application program 202 copies (stores) the selected object as recognized text in the clipboard. The recognized text is obtained by recognizing strokes corresponding to a handwritten character string as characters. The handwritten note application program 202 converts the selected object into text by character recognition, and copies (stores) the text in the clipboard. The application in which the text should be pasted is a text editor application.

### <Auto-complete Function>

The handwritten note application program 202 has an auto-complete function. The auto-complete function displays, on the display, one or more handwriting (one or more handwriting candidates) which are input candidates determined from stroke (temporary stroke) input by the user. When one of the handwriting candidates is selected by the user, the auto-complete function determines to enter the selected handwriting candidate in place of the temporary stroke.
1. The user turns the auto-complete mode on. The user interface (UI) is configured to switch the auto-complete mode between an on-state and an off-state.
2. The user inputs one or more strokes (one or more temporary strokes) on the display. These strokes are displayed on the display.
3. The handwritten note application program 202 determines one or more handwriting candidates and prepares a list of handwriting candidates (a handwriting candidate menu). Each handwriting candidate is a stroke string including one or more strokes. Each handwriting candidate may be a handwritten character string whose initial part includes a stroke similar to the temporary stroke.
4. The handwritten note application program 202 displays the list of handwriting candidates (the handwriting candidate menu) on the display. For example, when the user inputs temporary stroke corresponding to the character "a", the handwriting candidate menu may be displayed on the display such that the handwriting candidate menu includes: (1) handwriting corresponding to a character string "apple"; (2) handwriting corresponding to a character string "application"; and (3) handwriting corresponding to a character string "approval".
5. When the user selects a handwriting candidate from the handwriting candidate menu, the handwritten note application program 202 determines that the selected handwriting candidate should be entered in place of the temporary stroke. Thus, the temporary stroke input by the user is completed by using the selected handwriting candidate. The handwriting candidate is the confirmed (entered) strokes. The size (the height or the character gap) of the handwriting candidate may be, for example, automatically adjusted to the size corresponding to the size of strokes which are input before the temporary strokes.

In the auto-complete function, a handwriting candidate is extracted from handwriting data which is input by the user in the past. This means that the handwriting data which is input by the user in the past can be reused. The set of handwriting (handwriting candidates) collected from the handwriting data which is input by the user in the past may be stored in an auto-complete dictionary database. The handwritten note application program 202 is configured to automatically collect a set of handwriting from the handwriting notebook of the user, and store the set of handwriting in the auto-complete dictionary database. The handwritten note application program 202 is configured to obtain one or more handwriting candidates which are determined from temporary strokes from the auto-complete dictionary database. The user can also invalidate an arbitrary handwriting candidate in the auto-complete dictionary database. The invalidated handwriting candidate is not used for the auto-complete process.

In the auto-complete function, the handwritten note application program 202 may maintain the brightness of the writable area on the page and darken the other area on the page (in other words, the other area may be grayed out). For example, the handwritten note application program 202 may change the color of the background of the other area to a dark color. Thus, the display style of the writable area is differentiated from the display style of the other area. In this manner, the user can easily understand which area on the page is a writable area.

The writable area on the page is an elongate area which includes the display area of the temporary stroke and has a long-band shape extending in an input direction of characters corresponding to the temporary stroke. For example, when characters corresponding to temporary stroke are laterally written, an area which laterally extends is a writable area. The writable area is used as an area in which the selected handwriting candidate is entered in place of the temporary stroke. By displaying the writable area in a display style different from the other area, it is possible to show the position in which the selected handwriting candidate should be entered to the user in advance. Further, the other area (dark area) on the page functions as a wide button area which enables an instruction for entering (inputting) the temporary stroke on the page without selection of a handwriting candidate. When the other area on the page is tapped by a finger or the stylus, the handwritten note application program 202 determines to enter the temporary stroke. Thus, the temporary stroke is the confirmed (entered) stroke.

In the handwriting candidate menu, for example, three handwriting candidates (three handwriting suggestions) may be displayed. The handwriting candidate menu includes three button areas. The three handwriting candidates are displayed in the three button areas, respectively. Each button area is an operation area (selection area) for selecting the corresponding handwriting candidate.

When the user taps the operation area corresponding to a handwriting candidate (for example, when the user taps the button area corresponding to a handwriting candidate), the handwriting candidate corresponding to the operation area is entered (input) on the page. The handwriting candidate menu may further display a confirmation button and a show-more button.

When the user taps the confirmation button, the handwritten note application program 202 enters (inputs) temporary strokes on the page. When the user taps the show-more button, the handwritten note application program 202 enlarges the size of the handwriting candidate menu, and displays more than three handwriting candidates in the handwriting candidate menu.

The display position of handwriting candidates is explained below.

The display position of handwriting candidates is, or in other words, the display position of the handwriting candidate menu is preferably set such that the user can easily manipulate the menu while inputting temporary strokes in handwriting. In this layout, the user can easily select the desired handwriting candidate by slightly moving the stylus or a finger. The handwritten note application program 202 is configured to accept the setting for a left-handed user or a right-handed user. The user can select a left-handed mode or a right-handed mode by a setting tool provided by the handwritten note application program 202.

Alternatively, the setting tool of the OS 201 may set the left-handed mode or the right-handed mode in accordance with the operation by the user.

When the right-handed mode is set, the handwritten note application program 202 displays one or more handwriting candidates which are determined from temporary strokes, or in other words, a handwriting candidate menu, on the left side relative to the position of the temporary strokes. For example, the handwriting candidate menu may be displayed on the left side relative to the final end or the right end of the temporary stroke which is made last. In this case, the handwriting candidate menu may be displayed such that the right end of the menu is placed along the final end or the right end of the temporary stroke which is made last. The handwriting candidate menu only has to be displayed above or under the above-described writable area.

When the left-handed mode is set, the handwritten note application program 202 displays one or more handwriting candidates which are determined from temporary strokes, or in other words, a handwriting candidate menu, on the right side relative to the position of the temporary strokes. For example, the handwriting candidate menu may be displayed on the right side relative to the final end or the left end of the temporary stroke which is made last. In this case, the handwriting candidate menu may be displayed such that the left end of the menu is placed along the final end or the left end of the temporary stroke which is made last. The handwriting candidate menu only has to be displayed above or under the above-described writable area.

When a temporary stroke (first temporary stroke) is input, and subsequently, the next temporary stroke (second temporary stroke) is input, the handwritten note application program 202 displays, on the display, one or more handwriting candidates which are determined from the first temporary stroke and the second temporary stroke. When the handwriting candidates include a handwriting candidate identical to one or more handwriting candidates (already-displayed candidates) determined from the first temporary stroke, the handwritten note application program 202 may enlarge the operation area of the already-displayed candidates in accordance with the display position of the second temporary stroke without changing the display position of the already-displayed candidates. In this manner, there is no need to draw the already-displayed candidates again. In addition, the operation area is enlarged. Therefore, the operability is not impaired with regard to the selection of a handwriting candidate.

The handwritten note application program 202 laterally extends the already-displayed handwriting candidate menu. The handwriting candidate menu may be laterally extended such that the right end of the handwriting candidate menu is placed along the final end of the temporary stroke which is made last, or in other words, along the final end of the stroke which is made last. In this case, the handwriting candidate menu may be laterally extended such that the right end of the handwriting candidate menu is positioned on the left side by only some pixels relative to the final end of the stroke which is made last. In this manner, it is possible to laterally extend the size of each button area in the handwriting candidate menu without causing the temporal removal of the handwriting candidate menu from the screen and the reappearance of the handwriting candidate menu on the screen. For example, when the user writes strokes from left to right, the right end of the handwriting candidate menu extends to the right. Thus, the user can select the desired handwriting candidate by slightly moving the stylus or a finger.

### <Search Function>

The handwritten note application program 202 is configured to search for the desired page containing the desired stroke (handwritten character, handwritten figure, handwritten table and the like) by a handwriting (stroke) search or a text search. This function is based on a recognition technique.

When the user inputs handwriting (one or more strokes) as a search key, two methods can be used for searching for the desired page. One of the methods is a pattern matching method of handwriting features (stroke features). The other method is a character matching method based on character recognition. The handwritten note application program 202 automatically changes the algorithm to be used between the two methods based on the input handwriting (one or more strokes). For example, when the character string likelihood of the input handwriting (one or more strokes) is high, or in other words, when the possibility that the input handwriting is a character string is high, the character matching method is used. On the other hand, when the character string likelihood of the input handwriting (one or more strokes) is low, or in other words, when the possibility that the input handwriting is a figure, a table or a mark is high, the pattern matching method of stroke features is used.

In the pattern matching method of stroke features, handwriting having a feature similar to the handwriting input as the search key is searched for. For example, handwriting having a shape similar to the shape of the handwriting input as the search key is searched for.

In the character matching method based on character recognition, the handwriting input as the search key is converted into text (a character string) by character recognition. The page containing the character string which is the same as the text (character string) is searched for.

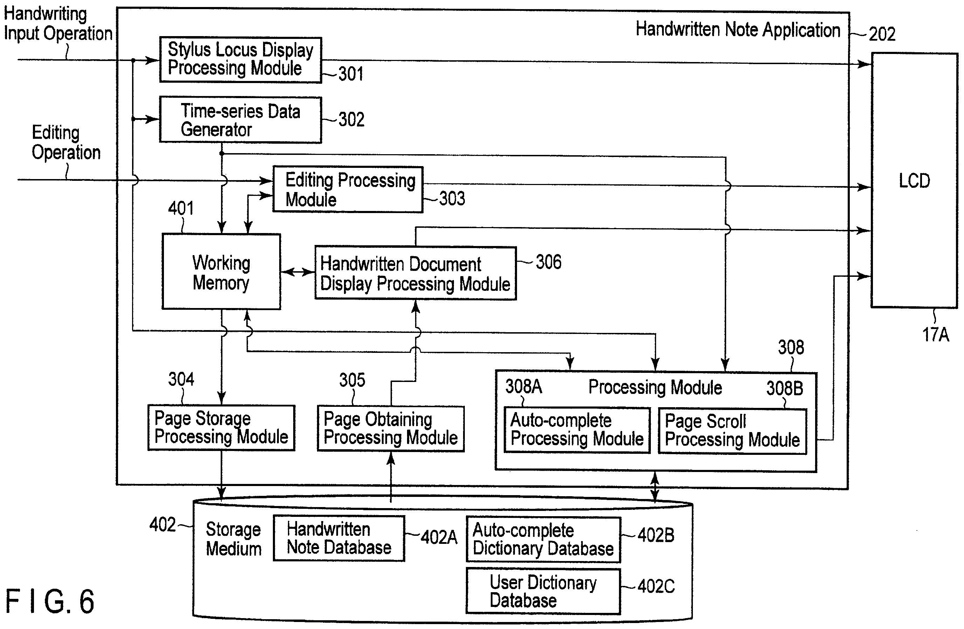

Now, this specification explains the configuration of the handwritten note application program 202, referring to FIG. 6.

The handwritten note application program 202 comprises a stylus locus display processing module 301, a time-series data generator 302, an editing processing module 303, a page storage processing module 304, a page obtaining processing module 305, a handwritten document display processing module 306, a processing module 308 and the like.

The handwritten note application program 202 creates, displays and edits a handwritten document (handwritten data) by using stroke data input by using the touchscreen display 17. The touchscreen display 17 is configured to detect the generation of events such as "touch", "move (slide)" and "release". The event "touch" indicates that an external object contacts with the screen. The event "move (slide)" indicates that the contact position is moved while an external object contacts with the screen. The event "release" indicates that an external object is separated from the screen.

The stylus locus display processing module 301 and the time-series data generator 302 detect a handwriting input operation by receiving the event "touch" or "move (slide)" generated by the touchscreen display 17. The event "touch" includes the coordinate of the contact position. The event "move (slide)" includes the coordinate of the contact position of the destination of the move. Thus, the stylus locus display processing module 301 and the time-series data generator 302 are configured to receive a series of coordinates corresponding to the locus of the move of the contact position from the touchscreen display 17.

The stylus locus display processing module 301 functions as a display processor configured to display one or more strokes which are input in handwriting on the screen of the touchscreen display 17. The stylus locus display processing module 301 receives the coordinate series from the touchscreen display 17. Based on the coordinate series, the stylus locus display processing module 301 displays a plurality of strokes which are input by a handwriting input operation by using the stylus 100, etc., on the screen of the LCD 17A of the touchscreen display 17. The stylus locus display processing module 301 is configured to perform various display control operations related to the display of the UI under the control of the processing module 308.

The time-series data generator 302 receives the above-described coordinate series which is output from the touchscreen display 17. Based on the coordinate series, the time-series data generator 302 generates a plurality of stroke data items (time-series data) corresponding to the above-mentioned plurality of strokes. These stroke data items may be, or specifically, the coordinate corresponding to each point of each stroke and the timestamp data of each stroke may be temporarily stored in a working memory 401.

The page storage processing module 304 stores handwritten document data including stroke data items corresponding to strokes in a handwritten note database 402A of a storage medium 402. The storage medium 402 may be, as described above, any one of the storage device of the tablet computer 10, the storage device of the personal computer 1, and the storage device of the server 2.

The page obtaining processing module 305 reads arbitrary handwritten document data from the storage medium 402. The read handwritten document data is transmitted to the handwritten document display processing module 306. The handwritten document display processing module 306 analyzes the handwritten document data. Based on the analysis result, the handwritten document display processing module 306 displays, as a page (handwritten page), a plurality of strokes shown by stroke data items in the handwritten document data on the screen.

The editing processing module 303 performs a process for editing the page which is currently displayed. The editing processing module 303 performs an editing process for deleting or moving one or more strokes of a plurality of strokes which are displayed in accordance with the editing operation conducted by the user on the touchscreen display 17. Further, to reflect the result of the editing process on the handwritten document which is displayed, the editing processing module 303 updates the handwritten document.

The user can delete an arbitrary stroke from a plurality of strokes which are displayed, by using the eraser tool, etc. The user can select an arbitrary portion on the handwritten page which is displayed, by using the range selection tool for surrounding an arbitrary portion on the screen by a rectangular or free frame.

The processing module 308 is configured to perform various processes such as the above-described auto-complete, search, copy, import and export processes. The processing module 308 includes, for example, an auto-complete processing module 308A and a page scroll processing module 308B.

The auto-complete processing module 308A is a processing module configured to perform the above-described auto-complete function. In the auto-complete mode, the auto-complete processing module 308A predicts handwriting or a stroke string (handwritten character string) which will be handwritten by the user, based on temporary stroke which is input on the display and handwritten document data. The auto-complete processing module 308A displays one or more handwriting candidates which are determined by the temporary stroke, and presents the handwriting candidates to the user.

For example, when a temporary stroke "a" is input in handwriting, a handwriting candidate such as a handwritten word "add" or "access" may be presented to the user. If the user selects the handwritten word "access", the temporary stroke "a" is completed by the handwritten word "access". The handwritten word "access" is entered on the page in place of the temporary stroke "a". In this manner, the user can easily input the strokes of the handwritten word "access".

When no handwriting candidate is selected, and the next stroke, for example, "b" is input, the auto-complete processing module 308A displays one or more handwriting candidates which are determined by two temporary strokes "ab" on the display, and presents the handwriting candidates to the user.

The language of handwritten character strings stored in handwritten document data may be any language. For example, the available languages include the English language, the Japanese language and various other languages. With regard to the English character strings, handwriting (handwritten character strings) may be stroke stings corresponding to character strings in block type, or may be stroke strings corresponding to character strings in script type. The word handwritten in script type may consist of one stroke. Therefore, each handwriting candidate (stroke string) which is obtained from handwritten document data in the auto-complete process does not necessarily include a plurality of strokes, and may consist of one stroke.

To easily specify the handwriting candidates which are determined from temporary strokes, the auto-complete processing module 308A may automatically collect handwriting such as handwritten character strings from the set of strokes (handwritten document data) stored in the handwritten note database 402A, and store the automatically-collected handwritten character strings in an auto-complete dictionary database 402B.

In the auto-complete dictionary database 402B, for example, handwriting (a stroke string) and a word (character recognition result) corresponding to the handwriting may be stored per meaningful character string (for example, per word). Further, in the auto-complete dictionary database 402B, in addition to a word and handwriting (a stroke string), a reading corresponding to the word may be stored. When the language of the word is English, an alias of the word may be stored in the auto-complete dictionary database 402B instead of the reading of the word.

The auto-complete processing module 308A may first apply a character recognition process to a temporary stroke input by the user. Then, the auto-complete processing module 308A discovers a word which is matched with the character recognition result (character string) of the temporary stroke by a forward matching search, referring to the auto-complete dictionary database 402B. The auto-complete processing module 308A obtains, from the auto-complete dictionary database 402B, handwriting (a stroke string) corresponding to the discovered word as a handwriting candidate which is determined from the temporary stroke.

Alternatively, in the auto-complete dictionary database 402B, for example, handwriting (a stroke string), and a feature amount corresponding to the handwriting may be stored per word. As the feature amount of handwriting, an arbitrary feature which can show the handwriting feature of the handwriting may be used. For example, as the feature amount, it is possible to use feature amount data indicating the shape, the direction, the inclination of stroke. In this case, the auto-complete processing module 308A may obtain, from the auto-complete dictionary database 402B, a handwriting candidate having a feature amount similar to the feature amount of temporary stroke.

The auto-complete processing module 308A may use a user dictionary database 402C. In the user dictionary database 402C, many handwriting candidates prepared in advance are stored. These handwriting candidates are handwritten character strings corresponding to many words, respectively. The user can register a new handwritten character string in the user dictionary database 402C. The user can also delete an arbitrary handwritten character string from the user dictionary database 402C.

The page scroll processing module 308B performs a process for restricting a method for scrolling a page in accordance with the type of the page (landscape page/portrait page). The display direction of the touchscreen display 17 (the orientation of the screen image) is automatically changed to at least a first direction and a second direction which are different from each other by 90 degrees in accordance with the direction (orientation) of the tablet computer 10. One of the first direction and the second direction corresponds to the landscape orientation, and the other one corresponds to the portrait orientation.

When a first area (page), in which a handwritten stroke can be input, has a rectangular shape which is laterally long, or in other words, when the displayed page is a landscape page, the page scroll processing module 308B is configured to scroll the first area only in the lateral direction, whether the display direction of the touchscreen display 17 is the first direction or the second direction. When the first area, in which a handwritten stroke can be input, has a rectangular shape which is longitudinally long, or in other words, when the displayed page is a portrait page, the page scroll processing module 308B is configured to scroll the first area only in the longitudinal direction, whether the display direction of the touchscreen display 17 is the first direction or the second direction.

Now, this specification explains some user interfaces which are provided by the handwritten note application program 202.

The processing module 308 of the handwritten note application program 202 supports a landscape mode and a portrait mode. These modes are automatically selected in accordance with the orientation of the tablet computer 10 and the OS setting. This behavior is managed by a UI module in the processing module 308.

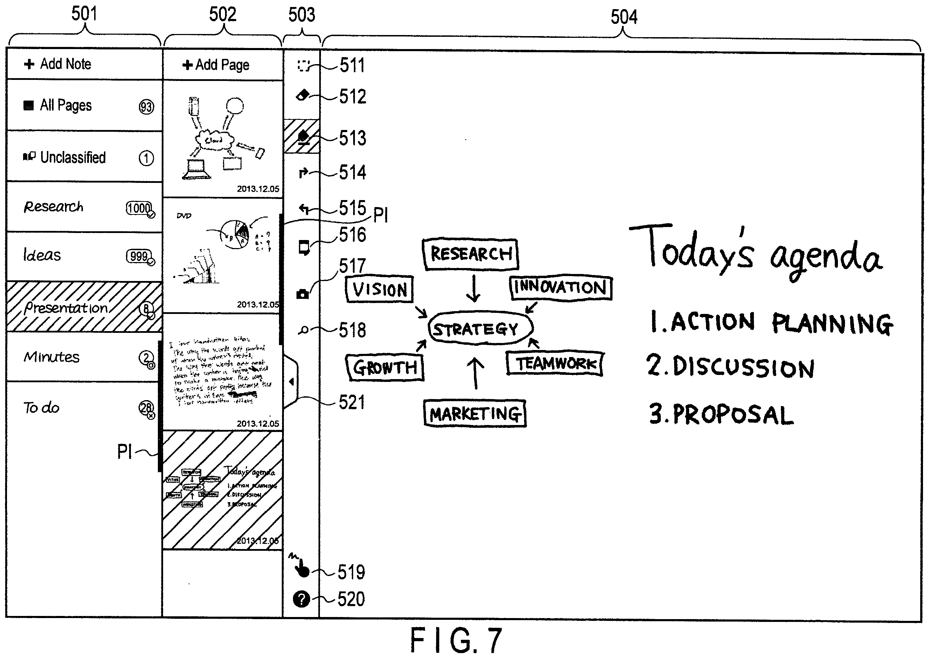

FIG. 7 shows a landscape UI (edit view). When the tablet computer 10 is laterally used, the processing module 308 displays the landscape UI (edit view) shown in FIG. 7. The landscape UI includes four areas which are a notebook list 501, a page list 502, an edit toolbar 503 and an edit view area 504. The areas 501 to 504 are arranged from the left end to the right end of the screen of the tablet computer 10.

The notebook list 501 shows a list of notebooks managed by the handwritten note application program 202. The two icons ("Add Note" and "All Pages") near the upper end of the notebook list 501 are command icons. When the icon "Add Note" is tapped by the user, the processing module 308 performs a process for adding a new notebook. When the icon "All Pages" is tapped by the user, the processing module 308 executes a process for displaying a thumbnail list corresponding to all of the pages of all of the notebooks.

The icon "Unclassified Pages" is a notebook icon showing a notebook containing a page group which does not belong to any of the notebooks of the user. The icon "Research" is a notebook icon showing the user's notebook titled "Research". The icon "Ideas" is a notebook icon showing the user's notebook titled "Ideas". The icon "Presentation" is a notebook icon showing the user's notebook titled "Presentation". The icon "Minutes" is a notebook icon showing the user's notebook titled "Minutes". The icon "To Do" is a notebook icon showing the user's notebook titled "To Do".

These notebook icons can be rearranged by a dragging and dropping operation.

In the notebook list 501, when the notebook list 501 is operated by a touch (finger) or the stylus 100, a panning indicator PI is displayed at, for example, the right end of the notebook list 501. The panning indicator PI shows the position of the content which is currently displayed in the notebook list 501 relative to the whole content which can be displayed in the notebook list 501. When the panning indicator PI is operated by a touch (finger) or the stylus 100, the notebook list 501 is longitudinally scrolled. When the mouse pointer is positioned on the notebook list 501, instead of the panning indicator PI, a scroll bar is displayed at, for example, the right end of the notebook list 501. The user can longitudinally scroll the notebook list 501 by a mouse.

The page list 502 shows a thumbnail list corresponding to the pages contained in the notebook corresponding to the notebook icon which is currently selected.

The icon "Add Page" at the top of the page list 502 is a command icon. When the icon "Add Page" is tapped by the user, the processing module 308 executes a process for adding a new page to the page which is currently edited.

Under the icon "Add Page", a plurality of page icons indicating thumbnails corresponding to a plurality of pages, respectively, are allocated. The strokes contained in the page corresponding to the selected page icon are displayed in the edit view area 504. The user can display an arbitrary page in the edit view area 504 by selecting an arbitrary page icon in the page list 502.

These page icons can be rearranged by a dragging and dropping operation. The user can change (customize) the page order by dragging and dropping the page icons.

In the page list 502, when the notebook list 502 is operated by a touch (finger) or the stylus 100, a panning indicator PI is displayed at, for example, the right end of the page list 502. The panning indicator PI shows the position of the content which is currently displayed in the page list 502 relative to the whole content which can be displayed in the page list 502. When the panning indicator PI is operated by a touch (finger) or the stylus 100, the page list 502 is longitudinally scrolled. When the mouse pointer is positioned on the page list 502, instead of the panning indicator PI, a scroll bar is displayed at, for example, the right end of the page list 502. The user can longitudinally scroll the page list 502 by a mouse.

The edit toolbar 503 includes some buttons for editing a page. A selection pen button 511 is used as a range selection tool. The user can select one or more objects in the edit view area 504 by the selection pen. When the selection pen button 511 is tapped by the user, the processing module 308 displays on the edit view area 504 a menu for changing the selection type (rectangle/free frame/select all).

An eraser pen button 512 is used as an eraser tool. The user can delete one or more strokes in the edit view area 504 by the eraser pen. When the eraser pen button 512 is tapped by the user, the processing module 308 displays on the edit view area 504 a menu for changing the eraser size (large/small/whole page).

A stroke input pen button 513 is used for drawing strokes. The user can draw strokes in the edit view area 504 by the stroke input pen. When the stroke input pen button 513 is tapped by the user, the processing module 308 displays a menu showing some preset pens. Each of the preset pens defines, for example, a combination of pen type (fountain pen/pencil/ballpoint pen/marker/felt pen), width, color and transparency. The user can select a pen from the menu.

An undo button 514 is used for undoing an editing operation. A redo button 515 is used for redoing an editing operation.

An auto-complete (suggestion input) button 516 is a button for turning the auto-complete mode on or off.

A camera button 517 is used for taking a picture and importing the picture into the edit view area 504. The user can take a picture by the camera button. The processing module 308 launches a capture application program. The capture application program captures an image (picture) by a camera (Webcam) provided in the tablet computer 10. The processing module 308 imports the captured image.

A search button 518 is a button for searching for pages containing the desired handwriting.

A touch input mode button 519 is a button for turning on or off a touch input mode which realizes drawing by a finger or a mouse.

A help button 520 is a button for displaying "help". A tab button 521 is a button for switching a normal mode/full-screen mode. The UI shown in FIG. 7 corresponds to the normal mode.

The edit view area 504 is a handwriting input area which realizes handwriting input.

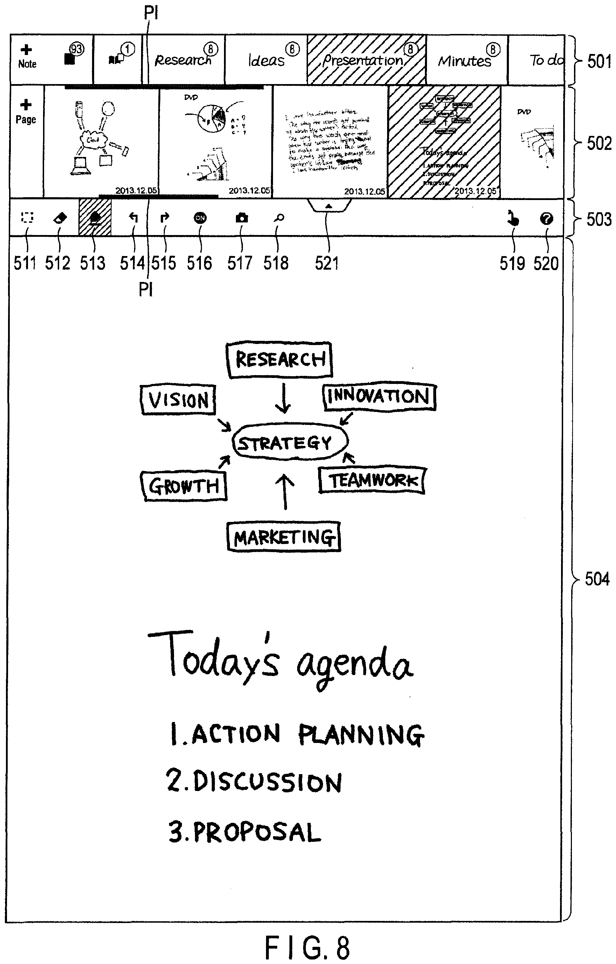

FIG. 8 shows a portrait UI (edit view). When the tablet computer 10 is longitudinally used, the processing module 308 displays the portrait UI (edit view) shown in FIG. 8. In the portrait UI, from the upper end to the lower end of the screen, the notebook list 501, the page list 502, the edit toolbar 503 and the edit view are 504 are arranged. FIG. 8 corresponds to a portrait UI in the normal mode.

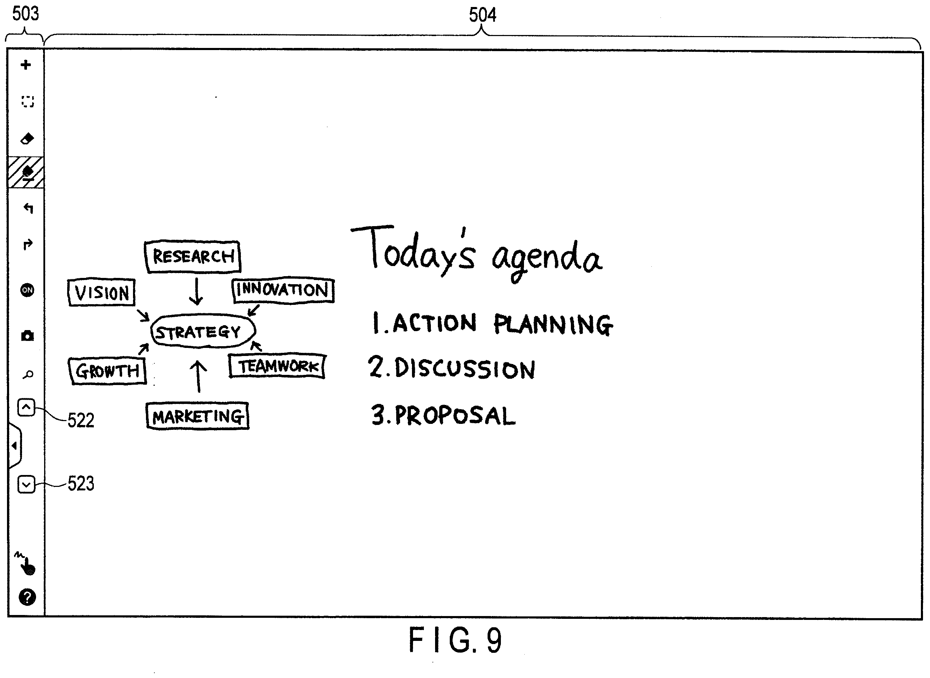

FIG. 9 shows a landscape UI in the full-screen mode.

In the landscape UI in the full-screen mode, the notebook list 501 and the page list 502 are hidden from the screen. The edit toolbar 503 is displayed at the left end of the screen. The edit view area 504 is enlarged to full screen.

In the edit toolbar 503, a page-up button 522 and a page-down button 523 are allocated. The user can switch the page which is displayed in the edit view area 504 to another page by operating the page-up button 522 or the page-down button 523.

The full-screen mode state is saved, and is carried on to the next launch.

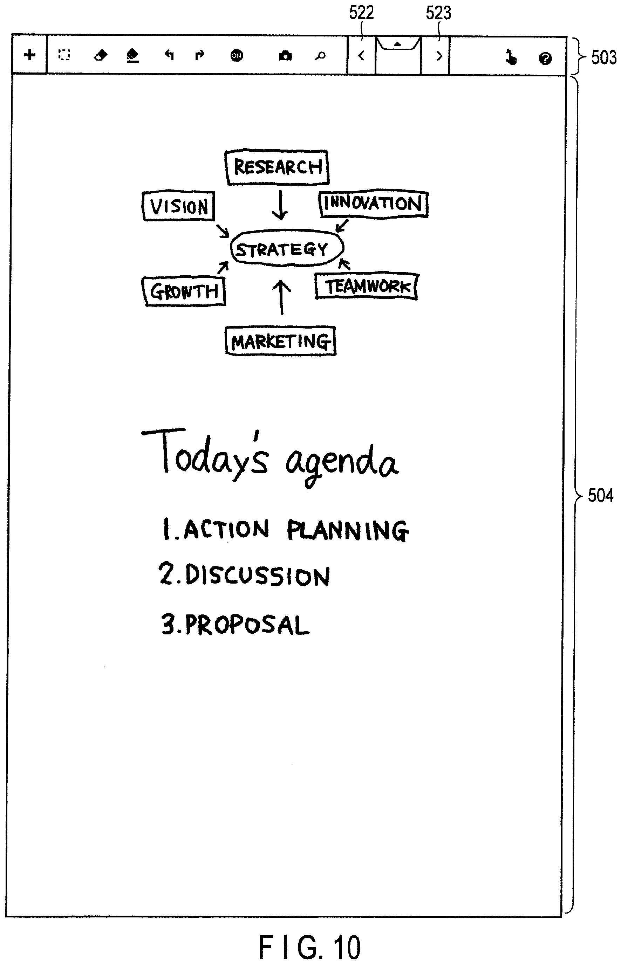

FIG. 10 shows a portrait UI in the full-screen mode.

In the portrait UI in the full-screen mode, the notebook list 501 and the page list 502 are hidden from the screen. The edit toolbar 503 is displayed at the upper end of the screen. The edit view area 504 is enlarged to full screen.

In the edit toolbar 503, the above-described page-up button 522 and page-down button 523 are allocated.

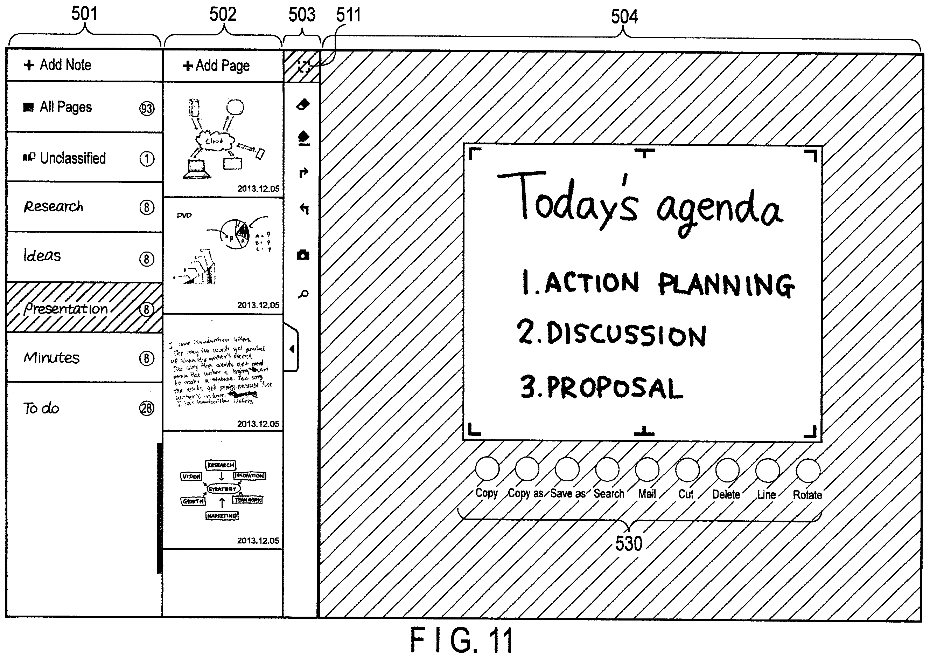

FIG. 11 is shown for explaining a range selection process.

FIG. 11 assumes that an object (handwritten character string) in the edit view area 504 is selected by the selection pen. The selected area and the other area are displayed in different display styles. For example, the other area may be, or in other words, the area outside the selected area may be displayed in a dark color. Alternatively, the area outside the selected area may be drawn in gray.

In the selected area, some scaling control icons are displayed. The scaling control icons are placed at each corner and side of the selected area. The scaling control icons function as tools for enlarging or shrinking the object (handwritten character strings) in the selected area.

For example, under the selected area, some action buttons 530 are displayed. The action buttons 530 are applicable to the object in the selected area. The user can apply processes such as "copy", "copy as a specific data format", "save as a specific data format", "search", "export to mail soft", "cut", "delete" and "rotate" to the object in the selected area by tapping one of the action buttons 530.

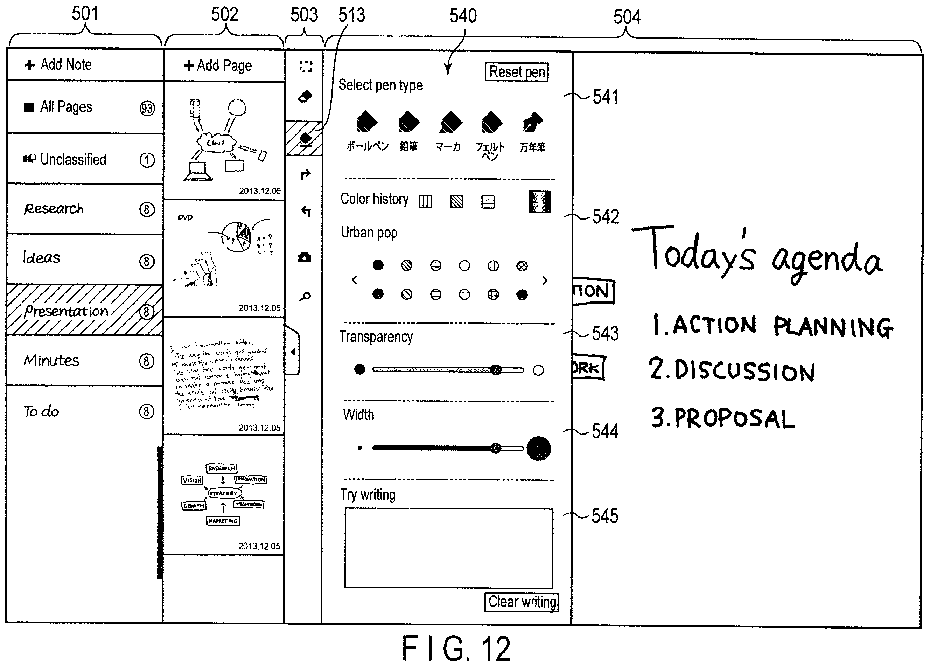

FIG. 12 is shown for explaining a pen setting process. For example, when the stroke input pen button 513 is given a long press, a pen setting panel 540 is displayed in the edit view area 504. Area 541 in the pen setting panel 540 is used for changing the pen (a ballpoint pen, a pencil, a marker, a felt pen and a fountain pen). Area 542 in the pen setting panel 540 is used for selecting a pen color from a color pallet. Area 543 in the pen setting panel 540 is used for changing the transparency. Area 544 in the pen panel 540 is used for changing the width (line width). Area 545 in the pen setting panel 540 is a handwriting input area used for trying the current pen setting.

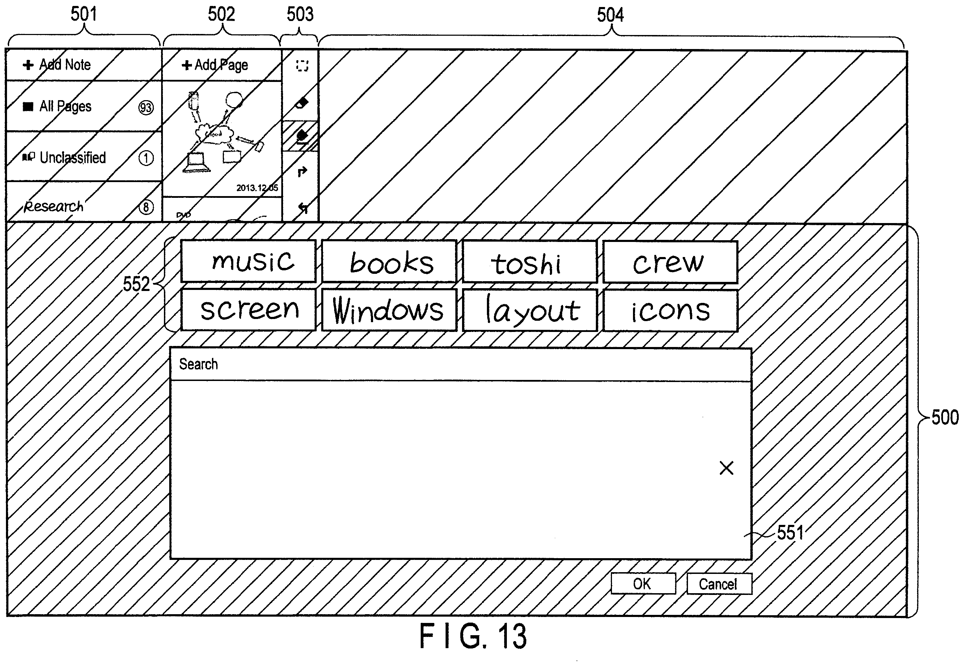

FIG. 13 shows auto-complete on the search screen. When the search function is selected by the user, as shown in FIG. 13, a search key input view 500 is displayed on the screen. When a stroke (temporary stroke) is input in a search key input area 551, some handwriting candidates are displayed in a handwriting candidate area 552 by the auto-complete function. One of the handwriting candidates is selected by the user, the selected handwriting candidate is displayed in the search key input area 551.

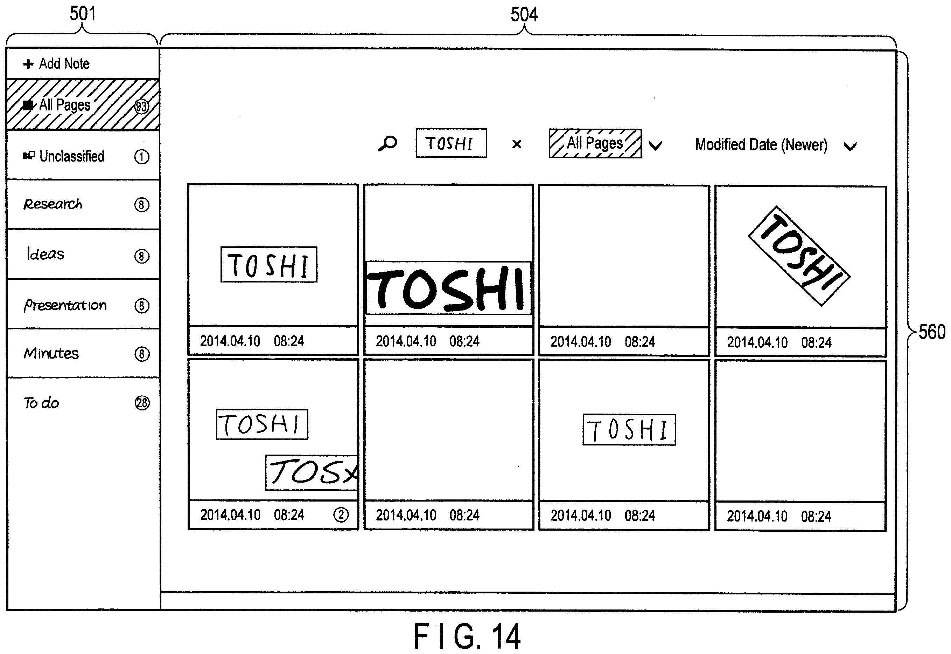

FIG. 14 shows an example of a search result view 560. When a search is performed in the view in which a list of all pages (a list of thumbnails of all pages) is displayed, the search result view 560 is displayed. This figure assumes that a handwritten character string "TOSHI" is used as the search key. In each page containing the handwritten character string "TOSHI", the handwritten character string "TOSHI" which is a hit word is highlighted.

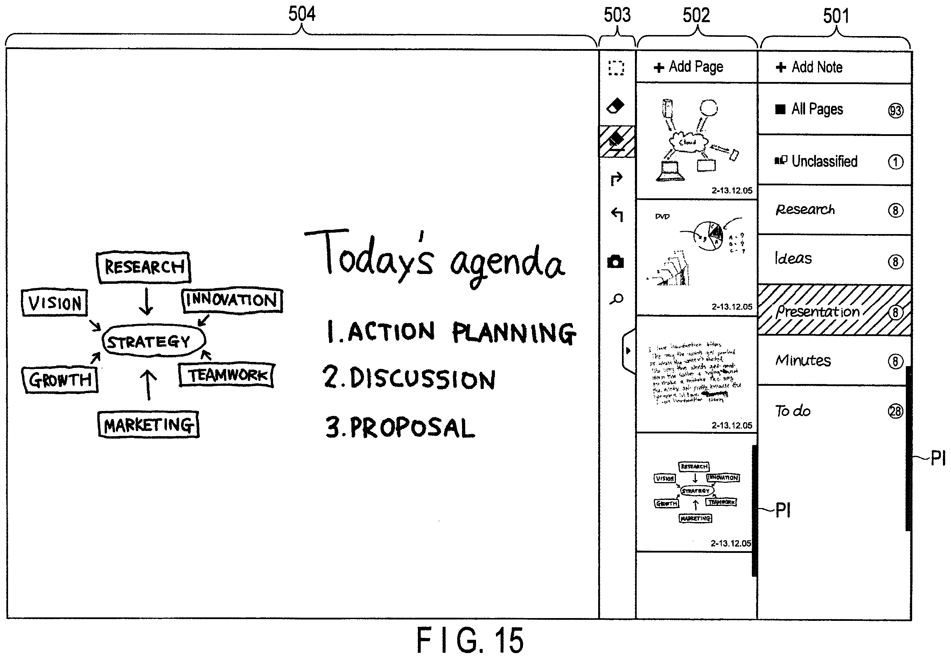

FIG. 15 shows a landscape UI (edit view) for a left-handed user.

In the landscape UI (edit view) for a left-handed user, the order in which the notebook list 501, the page list 502 and the edit toolbar 503 are arranged is opposite to the landscape UI for a right-handed user (FIG. 7). In short, in the landscape UI for a left-handed user, the notebook list 501, the page list 502 and the edit toolbar 503 are displayed on the right side of the screen. The notebook list 501, the page list 502, the edit toolbar 503 and the edit view area 504 are arranged from the right end to the left end of the screen.

In the notebook list 501, a panning indicator PI (or a scroll bar) is displayed at the right end of the notebook list 501 in a manner similar to the landscape UI for a right-handed user. In the page list 502, a panning indicator PI (or a scroll bar) is displayed at the right end of the page list 502 in a manner similar to the landscape UI for a right-handed user.

When the handwritten note application program 202 is launched, the handwritten note application program 202 checks the setting status of the left-handed mode/right-handed mode, and sets the notebook list 501, the page list 502 and the edit toolbar 503 on the left side or the right side of the screen.

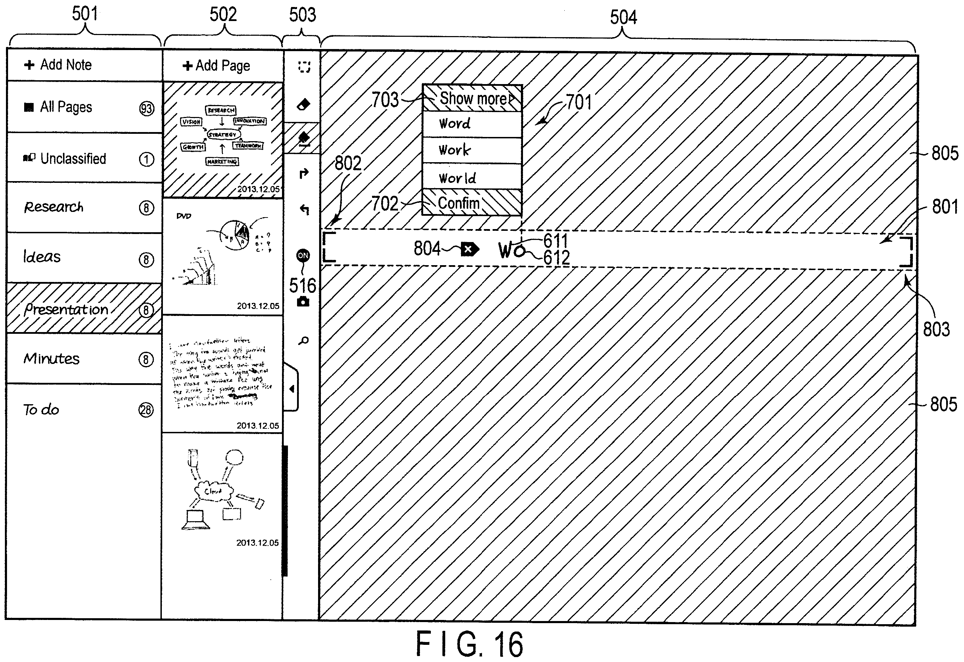

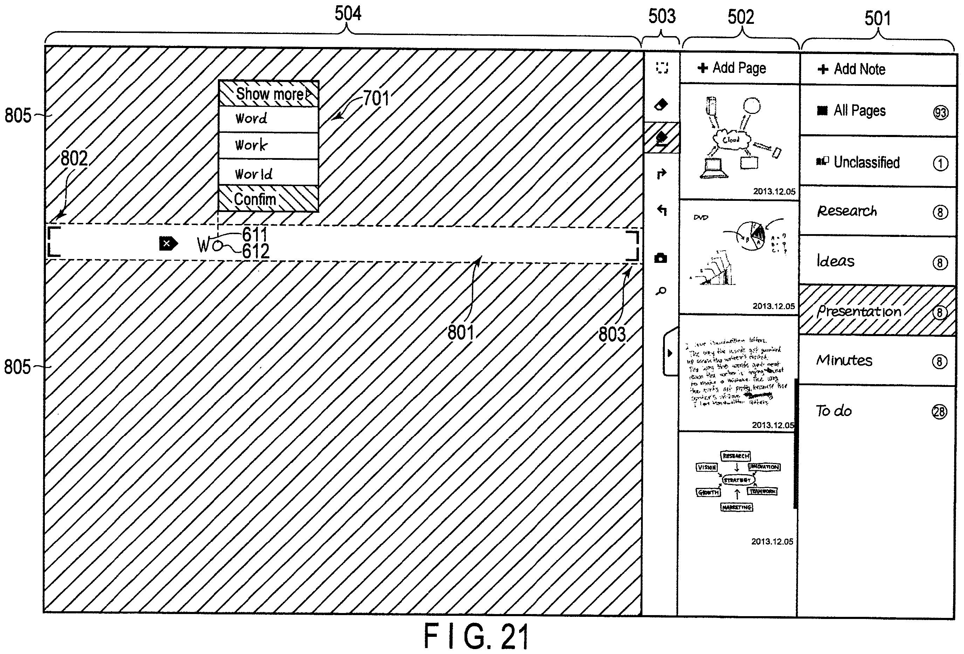

Now, this specification explains the change of the display style of the edit view area in the auto-complete mode (stroke suggestion mode). As stated above, the handwritten note application program 202 has an auto-complete function. When the user switches the auto-complete (suggestion input) button 516 on, the auto-complete mode is turned on. The user interface (UI) shown in FIG. 16 is displayed. The landscape UI (edit view) shown in FIG. 16 includes the notebook list 501, the page list 502, the edit toolbar 503 and the edit view area 504 in a manner similar to the edit view shown in FIG. 15. In a manner different from the example of FIG. 15, these areas 501 to 504 are arranged from the left end to the right end of the screen of the tablet computer 10. The layout direction of the areas 501 to 504 is changed depending on the dominant hand of the user. FIG. 16 to FIG. 19 show examples for a right-handed user. FIG. 21 shows an example for a left-handed user.

Under the icon "Add Page" in the page list 502, a plurality of page icons indicating thumbnails corresponding to a plurality of pages, respectively, are arranged. The strokes contained in the page corresponding to the selected page icon are displayed in the edit view area 504. The user can display an arbitrary page in the edit view area 504 by selecting an arbitrary page icon in the page list 502. In the page list 502, the selected page icon is different from the other page icons in terms of display styles. The figure shows that the page (content) at the top is selected. Thus, the content is displayed in the edit view area 504. However, to simplify the explanation, the display of the content is omitted. Alternatively, by selecting the icon "Add Page", new content can be prepared instead of the already-prepared content.

The auto-complete (suggestion input) button 516 in the edit toolbar 503 is changed to a display state indicating an on-state for the purpose of showing that the auto-complete mode is turned on.

The user inputs stroke (temporary stroke) by hand Writing in the desired portion in the edit view area 504. The input temporary stroke is displayed in the edit view area. When the temporary stroke is laterally input, a writable area 801 having a horizontal-band shape for indication of input is displayed in the edit view area 504. The writable area 801 is displayed in a style different from the other area 805. For example, the other area 805 outside the writable area 801 may be darkened while the brightness of the writable area 801 is maintained. When the temporary stroke is longitudinally input, the writable area 801 is an elongate area having a band shape which extends perpendicularly. At this point, a handwriting candidate menu 701 is displayed near the display position of the temporary stroke. The handwriting candidate menu 701 includes, for example, three entries (button areas) which can display handwriting candidates. At the point when the user started writing temporary stroke, the handwriting candidate menu 701 in which the three entries are blank may be displayed near the display position of the temporary stroke.

At each of the left and right ends of the writable area 801, a mark indicating the start/end position is displayed. For example, a pair of brackets 802 and 803 is provided. The writable area 801 may extend over the whole row, or may extend in a part of the row. The pair of brackets 802 and 803 indicates the end portions of the writable area 801 in the right-and-left direction (row direction), and also indicates the end portions in the top-and-bottom direction (height direction). The default value of the height of the writable area 801 is determined. However, for example, by dragging a lower bracket downward, the height of the row can be increased. When the height of the row is increased, it is possible to increase the character size (character height) when a handwriting candidate is automatically entered (input) on a page as described later.

When the user inputs temporary stroke by handwriting in the writable area 801, the handwritten note application program 202 determines one or more handwriting candidates and prepares a list of handwriting candidates (a handwriting candidate menu). When the user inputs temporary stroke 611 corresponding to the character "W" and temporary stroke 612 corresponding to the character "o", a temporary stroke string corresponding to the character string "Wo" is displayed in the writable area 801, and a deletion button 804 is displayed on the left side relative to the temporary stroke string such that the deletion button 804 is spaced from the temporary stroke string. When the deletion button 804 is selected, the temporary stroke which is input last is deleted. Since the deletion button 804 is close to the handwritten temporary strokes, there is no need to separate the hand from the display to operate the deletion button 804. Thus, the operability of input cancellation is improved.

When the temporary stroke string corresponding to the character string "Wo" is displayed in the writable area 801, the handwriting candidate menu 701 is displayed above a position corresponding to the right end of the temporary stroke string. In this example, the handwriting candidate menu 701 including three handwriting candidates corresponding to three character strings "World", "Work" and "Word" including the handwritten character string "Wo" is displayed. The handwriting candidates are obtained by searching the auto-complete dictionary 402B for strokes similar to the temporary strokes. Each handwriting candidate is a stroke string including one or more strokes. Each handwriting candidate may be handwriting whose front portion includes strokes similar to the temporary strokes. The handwriting candidate menu 701 includes three entries (button areas). Three handwriting candidates are displayed in the three button areas respectively.

When the user taps a button area in the handwriting candidate menu 701, the handwriting candidate corresponding to the tapped button area is entered (input) on the page. The temporary stroke or temporary strokes input by the user are completed by using the selected handwriting candidate. The handwriting candidate is the confirmed (entered) handwriting. In this manner, the user can easily input handwritten strokes corresponding to the desired word or phrase without inputting all strokes corresponding to the desired word or phrase by hand. The size of the handwriting candidate which is entered on the page is automatically adjusted in accordance with the height of the writable area 801.

The size (height and width) of the handwriting candidate menu 701 is set such that three handwriting candidates can be displayed. In the initial state, the display position of the handwriting candidate menu 701 is set in the following manner: the right end is along the position of temporary stroke 612 corresponding to the character "o" which is input last; and the lower end is close to the writable area 801. The left end of the handwriting candidate menu 701 may be determined in accordance with the length of each handwriting candidate (for example, the number of characters of each handwritten word).

The handwriting candidate menu 701 is displayed such that the handwriting candidate menu 701 is adjacent to the upper side of the writable area 801. Therefore, when the user taps one of the button areas to enter a handwriting candidate, the user only has to slightly shift the stylus tip in the upper direction, and does not need to separate the hand from the display. Thus, the operability to enter a handwriting candidate is improved. In addition, the right end of the handwriting candidate menu 701 is along the position of temporary stroke 612 corresponding to the character "o" which is made last. Therefore, by slightly shifting the stylus tip in the upper direction, the user can tap the right end of the button areas. The user does not need to separate the hand from the display. In this manner, the operability to enter a handwriting candidate is improved.

The handwriting candidates are obtained with priorities based on the similarity to the temporary strokes. The priorities of the handwriting candidates displayed in the button areas are higher toward the writable area 801. In the example of FIG. 16, "World" has the highest priority, and the priorities are decreased in the order of "Work" and "Word". Thus, the handwriting candidate which has the highest priority and is likely to be selected is the closest to the current stylus position (the temporary stroke corresponding to "o"). Therefore, the user does not need to separate the hand from the display to tap it. In this manner, the operability to enter a handwriting candidate is improved. Further, the right end of the handwriting candidate menu 701 is along the position of temporary stroke 612 corresponding to the character "o" which is input last. This layout also contributes to the enhancement of operability to tap and enter a handwriting candidate.

When the number of characters corresponding to the handwritten string which should be input is small while the auto-complete mode is turned on, temporary strokes may be straightly the handwritten string which should be input, and the user may not need to select a handwriting candidate. In this case, it is necessary to conduct an operation for confirming the temporary strokes, or in other words, an operation for instructing that the temporary strokes should be entered. In the present invention, the temporary strokes are confirmed by tapping the area 805 which is the area other than the writable area 801 in the edit view area 504. To tap the area other than the writable area 801, the user only has to slightly move the stylus tip up and down. Thus, the user can easily confirm the temporary strokes. In addition, since the display style of the writable area 801 is different from that of the other area 805, the user does not mistake the area to be tapped. In this manner, the user can surely confirm the temporary strokes. The confirmation of the temporary strokes can be also executed by tapping a confirmation button 702 in the handwriting candidate menu 701.

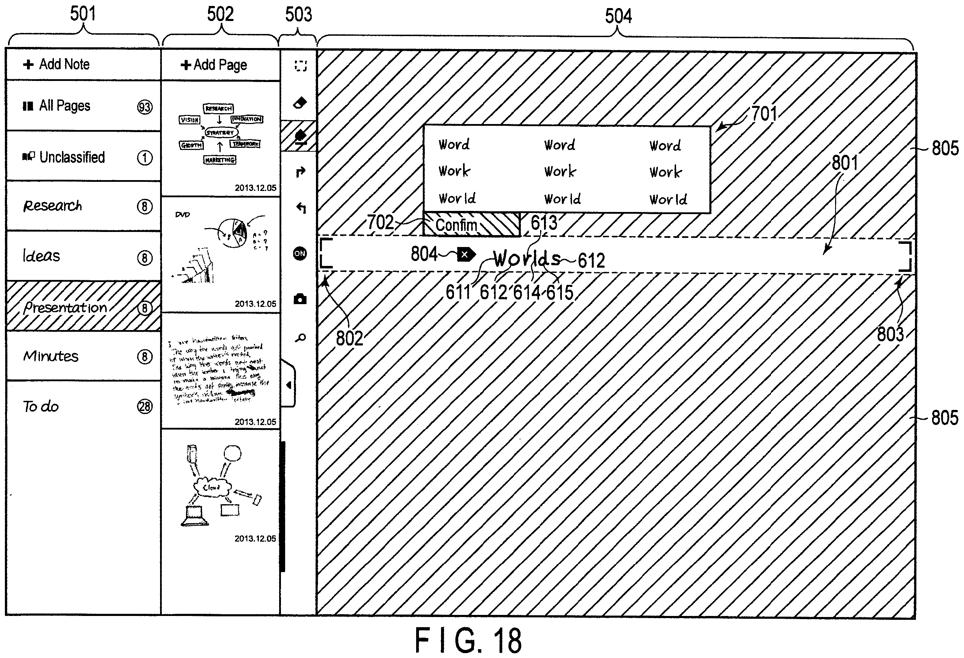

The handwriting candidate menu 701 may further display a show-more button 703. When the user taps the show-more button 703, the handwritten note application program 202 enlarges the size of the handwriting candidate menu 701, and displays more than three handwriting candidates in the handwriting candidate menu 701 (refer to FIG. 18).

When the desired handwriting (desired handwritten character string) is not included in the handwriting candidate menu 701, the user continues to input temporary strokes by hand in the writable area 801. In the handwriting candidate menu 701, the handwriting candidates are updated. When the handwriting candidates are updated, the handwriting candidate menu 701 is also renewed.

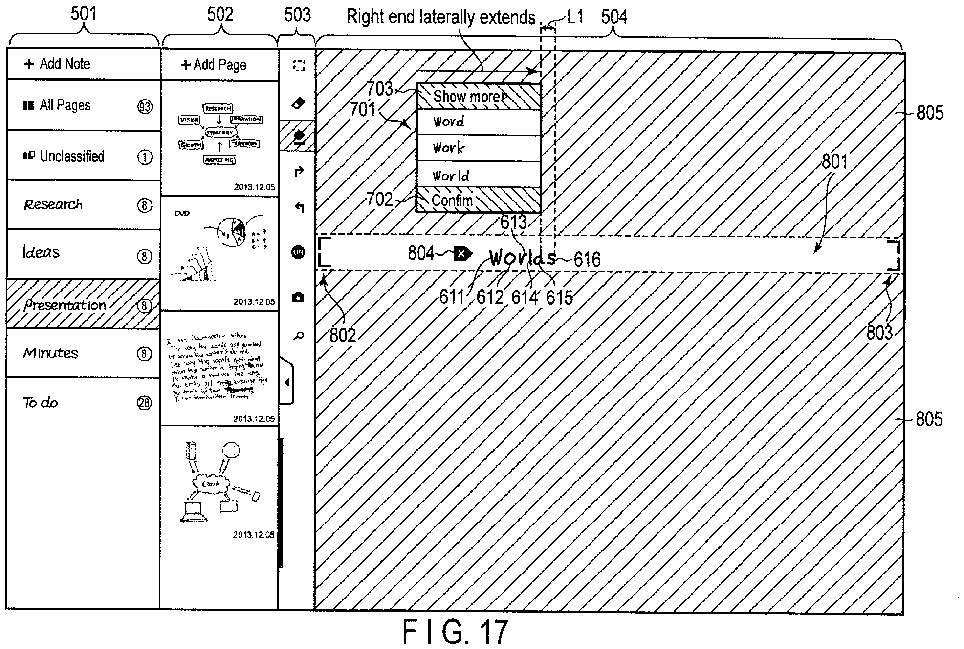

FIG. 17 shows that the user further inputs temporary stroke 613 corresponding to the character "r", temporary stroke 614 corresponding to the character "1", temporary stroke 615 corresponding to the character "d" and temporary stroke 616 corresponding to the character "s" from the state of FIG. 16. The handwriting candidate menu 701 may be renewed such that handwritten character strings including "Worlds" are displayed in the handwriting candidate menu 701.

When a handwriting candidate included in the menu before update is also included in the updated menu, the display position (button area) of the handwriting candidate may be the same as the position before update regardless of the priority. The handwriting candidate which is the same as the handwriting candidate included in the menu before update may be displayed in a color different from a new handwriting candidate which is not included in the menu before update. For example, the same handwriting candidate may be displayed in black, and a different handwriting candidate may be displayed in red.

To improve the operability to tap the buttons of the handwriting candidate menu 701, as shown in FIG. 17, the right end of the handwriting candidate menu 701 (the right end of each button area) is extended rightward in connection with the input of temporary strokes. In this layout, the user does not need to separate the hand from the display to tap one of the button areas. In this example, the right end of the handwriting candidate menu 701 is extended to a position before the position of temporary stroke 616 corresponding to the character "s" which is the first character from the right only by a predetermined length L1. This operation is continued until a handwriting candidate is entered or temporary strokes are entered.

The right end of the handwriting candidate menu 701 may not always be extended in the lateral direction. Conditions for performing the extending process may be set. For example, when at least one handwriting candidate is common to the handwriting candidates included in the handwriting candidate menu 701 which is previously displayed and the handwriting candidates included in the handwriting candidate menu which is updated by addition of handwriting input, the right end of the menu 701 may be extended without changing the display position of the common handwriting candidate (for example, without changing the position of the handwriting candidate menu 701 which is previously displayed). When there is no common handwriting candidate at all, the right end of the menu 701 may not be extended.

FIG. 18 shows a display style of the handwriting candidate menu 701 when the user taps the show-more button 703 in the handwriting candidate menu 701 during handwriting input. In this case, nine handwriting candidates are displayed in nine (three multiplied by three) button areas which are further laterally extended compared to the example of FIG. 17. In FIG. 18, to simplify the figure, the three same handwriting candidates are displayed in three columns. However, in practice, different nine handwriting candidates may be displayed. The priorities of nine button areas are set such that the priorities are the first (the highest), second, third from bottom to top of the leftmost column, fourth, fifth, sixth from bottom to top of the central column, seventh, eighth and ninth from bottom to top of the rightmost column. When the desired handwriting candidate is not included in the nine handwriting candidates, and the user continues to input temporary strokes, the display of the handwriting candidate menu 701 may go back to the display shown in FIG. 17 in which the handwriting candidate menu 701 shows three handwriting candidates.

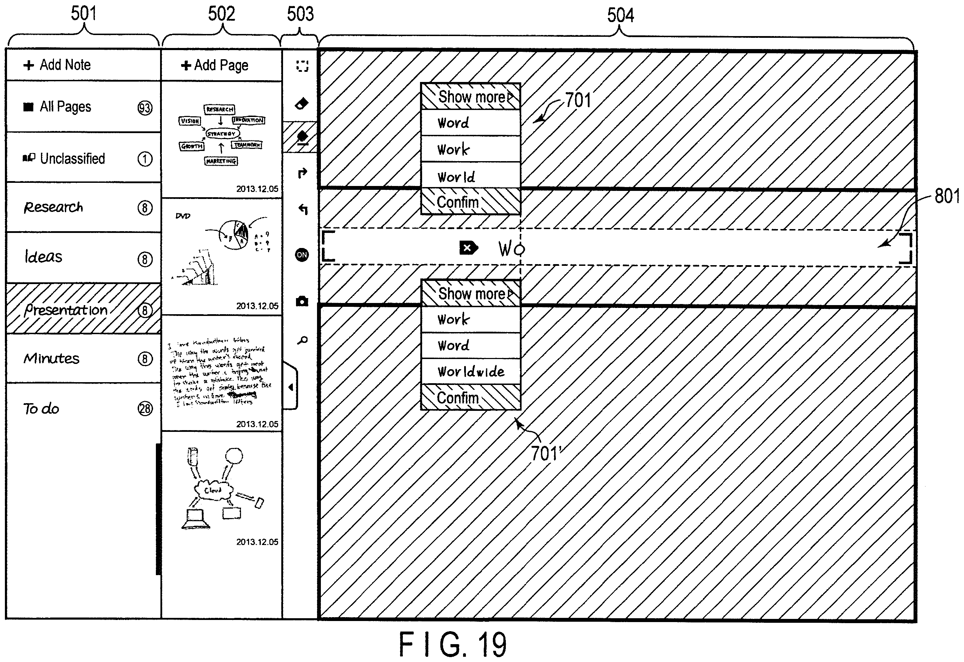

FIG. 19 shows a modification example related to the display position of the handwriting candidate menu 701. In the above explanation, the handwriting candidate menu 701 is displayed above the writable area 801. However, when the writable area 801 is located in the upper part of the page, the display space cannot be assured above the writable area 801. When the position of the writable area 801 is determined, and for example, the writable area 801 is located in the top one-third area of the edit view area 504 lengthwise, a handwriting candidate menu 701' is displayed under the writable area 801 instead of the handwriting candidate menu 701 shown in FIG. 16. In the handwriting candidate menu 701', the top button (the button which is the closest to the writable area 810) is the show-more button 703, and the bottommost button is the confirmation button 702. In the handwriting menu 701, the priorities of handwriting candidates are set as the first, second and third from the bottom. In the menu 701', the handwriting candidate which has the highest priority is displayed immediately under the show-more button 703 such that the handwriting candidate which has the highest priority and is likely to be selected is the closest to the current stylus position. In short, in the handwriting menu 701', the priorities of handwriting candidates are the first, second and third from the top.

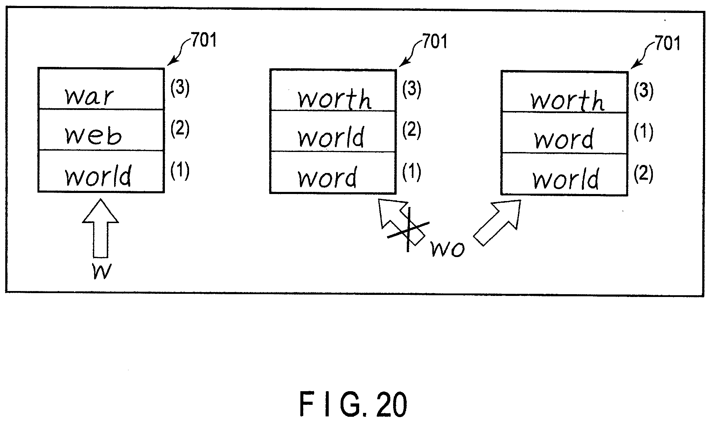

Now, this specification explains the display style when the handwriting candidate menu 701 is updated, referring to FIG. 20. When the user inputs a temporary stroke corresponding to the character "W", for example, the handwriting candidate menu 701 including three handwriting candidates "World", "Web" and "War" is displayed. The priorities of the handwriting candidates "World", "Web" and "War" are the first, second and third, respectively. Therefore, the handwriting candidate "World" is displayed in the bottommost position.

When the user inputs a temporary stroke corresponding to the character "o" after the input of the temporary stroke corresponding to the character "W", new handwriting candidates are determined from the two temporary strokes. This specification assumes a case where three handwriting candidates "Word", "World" and "Worth" are determined as handwriting candidates corresponding to the two temporary strokes. The priorities of the handwriting candidates "Word", "World" and "Worth" are the first, second and third, respectively. In this case, normally, the handwriting candidate "World" is displayed in the second entry (button area) from the bottom of the handwriting candidate menu 701. However, since the handwriting candidate "World" was displayed in the previous time, the user may remember that the handwriting candidate "World" was in the bottommost position of the handwriting candidate menu 701.

In the present embodiment, the display position of the handwriting candidate "World" which is common to the previous time and this time is not changed in the handwriting candidate menu 701. As a result, the handwriting candidate "World" is displayed in the same position as the previous time in the handwriting candidate menu 701. In short, the handwriting candidate "World" is displayed in the bottommost position. The other handwriting candidates "Word" and "Worth" are arranged in accordance with the relationship of their priorities. The handwriting candidate "Word" is displayed in the second position from the bottom. The handwriting candidate "Worth" is displayed at the top.

In this example, since the previous priority of the handwriting candidate "World" which is common to the previous time and this time is the first, the handwriting candidate "World" is displayed in the bottommost position in the same manner as the previous time. However, if the previous priority of the handwriting candidate "World" is the third, the handwriting candidate "World" is displayed at the top in the same manner as the previous time.

The right end of the handwriting candidate menu 701 (the right end of each button area) may be laterally enlarged in accordance with the position of the temporary stroke corresponding to the character "o" without changing the display position of the handwriting candidate menu 701 in the same manner as FIG. 17.

Only one handwriting candidate may be displayed in the handwriting candidate menu 701. In this case, the right end of the operation area for selecting the handwriting candidate "World" (the right end of the entry corresponding to the handwriting candidate "World") only has to be extended to a position which is close to the position of the temporary stroke corresponding to the character "o" without changing the display position of the handwriting candidate "World" which is common to the previous time and this time.

FIG. 21 shows the control of the display position of the handwriting candidate menu 701 in the left-handed mode.

When the left-handed mode is set, the handwritten note application program 202 displays one or more handwriting candidates determined from temporary strokes which are input, or in short, the handwriting candidate menu 701, on the right side relative to the position of the temporary strokes as shown in FIG. 21.

Since the left end of the handwriting candidate menu 701 is along the position of temporary stroke 612 corresponding to the character "o" which is written by hand last, the user can tap a button area by slightly shifting the stylus tip upward. The user does not need to separate the hand from the display. Thus, the operability to enter a handwriting candidate is enhanced.

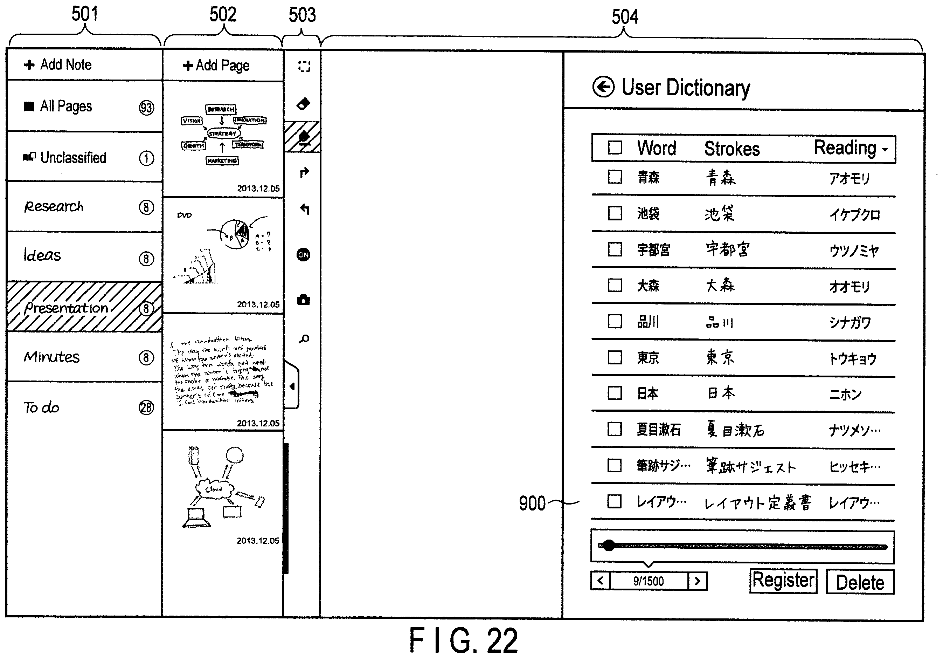

FIG. 22 shows a UI for editing the user dictionary database 402C.

In a user dictionary edit view 900, strokes (a stroke string) and a reading (or an alias) are displayed for each word. The user can select a word which is not used and delete the data corresponding to the word from the user dictionary database 402C. The user can also register a handwriting candidate corresponding to an arbitrary word in the user dictionary database 402C.

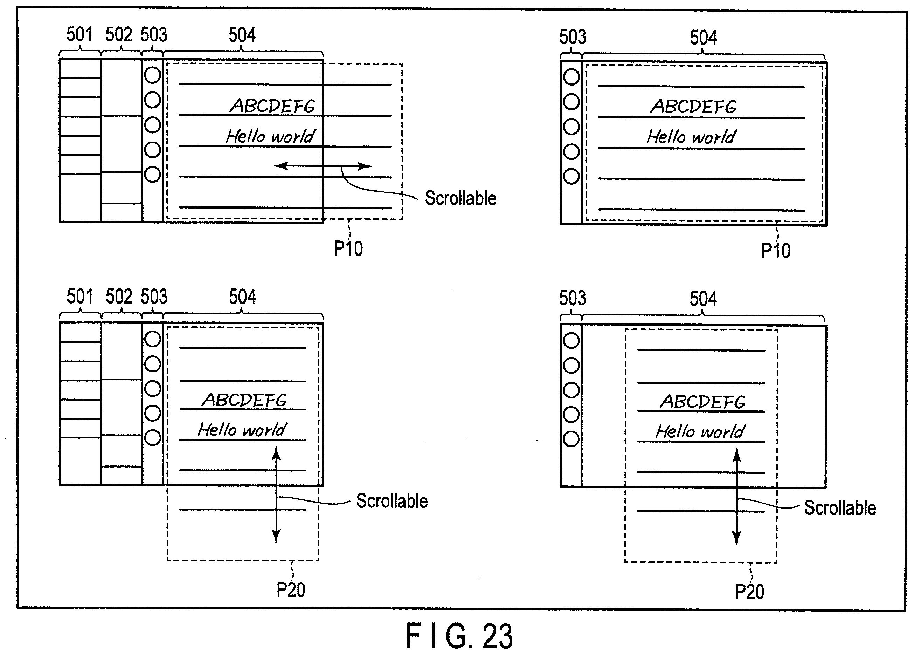

FIG. 23 shows the relationship between a landscape UI and a landscape page or a portrait page.

In FIG. 23, the upper left screen is an example in which a landscape page P10 is displayed in the landscape UI in the normal mode. The lower left screen is an example in which a portrait page P20 is displayed in the landscape UI in the normal mode. The upper right screen is an example in which the landscape page p10 is displayed in the landscape UI in the full-screen mode. The lower right screen is an example in which the portrait page p20 is displayed in the landscape UI in the full-screen mode.

As explained above, for example, in the landscape UI for a right-handed user in the normal mode, the notebook list 501, the page list 502, the edit toolbar 503 and the edit view area 504 are displayed from the left end to the right end of the screen of the tablet computer 10. For example, in the landscape UI for a right-handed user in the full-screen mode, the notebook list 501 and the page list 502 are hidden from the screen. Only the edit toolbar 503 is displayed at the left end of the screen. The edit view area 504 is enlarged to full screen.

In the normal mode, the notebook list 501 and the page list 502 are displayed on the screen. Thus, the size of the edit view area 504 is limited compared to the full-screen mode. When the landscape page P10 is displayed in the landscape UI in the normal mode, as shown in the example of the upper left screen, the processing module 308 displays a part of the landscape page P10 in the edit view area 504, and sets the landscape page P10 displayed in the edit view area 504 such that the landscape page P10 can be scrolled only in the lateral direction. When the portrait page P20 is displayed in the landscape UI in the normal mode, as shown in the example of the lower left screen, the processing module 308 displays a part of the portrait page P20 in the edit view area 504, and sets the portrait page P20 displayed in the edit view area 504 such that the portrait page P20 can be scrolled only in the vertical direction.

In the full-screen mode, the notebook list 501 and the page list 502 are hidden from the screen. Thus, the size of the edit view area 504 is not limited. This is different from the normal mode. When the landscape page P10 is displayed in the landscape UI in the full-screen mode, as shown in the example of the upper right screen, the processing module 308 displays the whole landscape page P10 in the edit view area 504. When the portrait page P20 is displayed in the landscape UI in the full-screen mode, as shown in the example of the lower right screen, the processing module 308 displays a part of the portrait page P20 in the central portion of the edit view area 504, and sets the portrait page P20 displayed in the edit view area 504 such that the portrait page P20 can be scrolled only in the vertical direction.

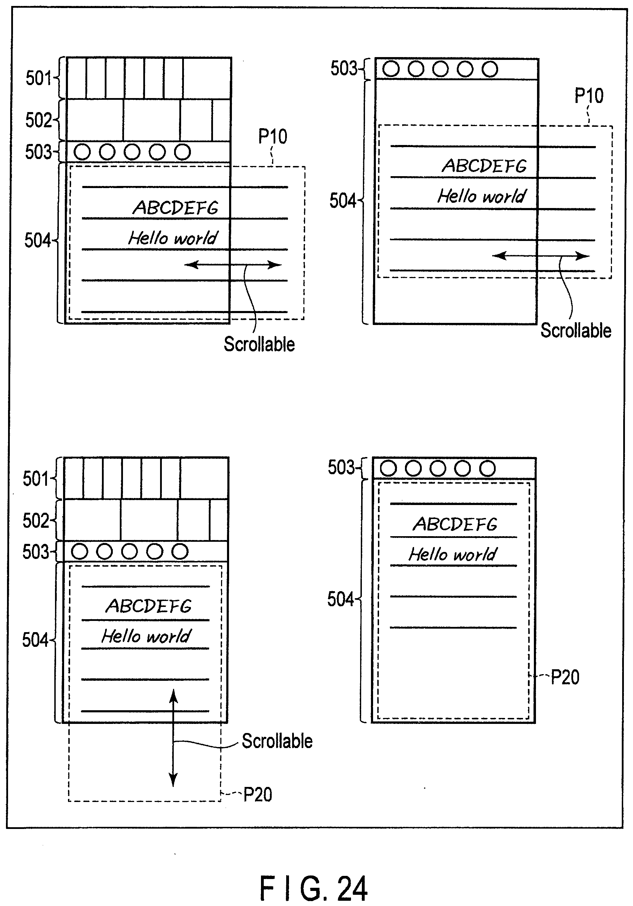

FIG. 24 shows the relationship between a portrait UI and the landscape page or the portrait page.

In FIG. 24, the upper left screen is an example in which the landscape page P10 is displayed in the portrait UI in the normal mode. The lower left screen is an example in which the portrait page P20 is displayed in the portrait UI in the normal mode. The upper right screen is an example in which the landscape page P10 is displayed in the portrait UI in the full-screen mode. The lower right screen is an example in which the portrait page P20 is displayed in the portrait UI in the full-screen mode.

As stated above, in the portrait UI in the normal mode, the notebook list 501, the page list 502, the edit toolbar 503 and the edit view area 504 are displayed from the upper end to the lower end of the screen of the tablet computer 10. In the portrait UI in the full-screen mode, the notebook list 501 and the page list 502 are hidden from the screen. Only the edit toolbar 503 is displayed at the upper end of the screen. The edit view area 504 is enlarged to full-screen.

In the normal mode, the notebook list 501 and the page list 502 are displayed on the screen. Thus, the size of the edit view area 504 is limited compared to the full-screen mode. When the landscape page P10 is displayed in the portrait UI in the normal mode, as shown in the example of the upper left screen, the processing module 308 displays a part of the landscape page P10 in the edit view area 504, and sets the landscape page P10 displayed in the edit view area 504 such that the landscape page P10 can be scrolled only in the lateral direction. When the portrait page P20 is displayed in the portrait UI in the normal mode, as shown in the example of the lower left screen, the processing module 308 displays a part of the portrait page P20 in the edit view area 504, and sets the portrait page P20 displayed in the edit view area 504 such that the portrait page P20 can be scrolled only in the vertical direction.

In the full-screen mode, the notebook list 501 and the page list 502 are hidden from the screen. Thus, the size of the edit view area 504 is not limited. This is different from the normal mode. However, when the landscape page P10 is displayed in the portrait UI in the full-screen mode, as shown in the example of the upper right screen, the processing module 308 displays a part of the landscape page P10 in the central portion of the edit view area 504, and sets the portrait page P10 displayed in the edit view area 504 such that the portrait page P10 can be scrolled only in the lateral direction. When the portrait page P20 is displayed in the portrait UI in the full-screen mode, as shown in the example of the lower right screen, the processing module 308 displays the whole portrait page P20 in the edit view area 504.

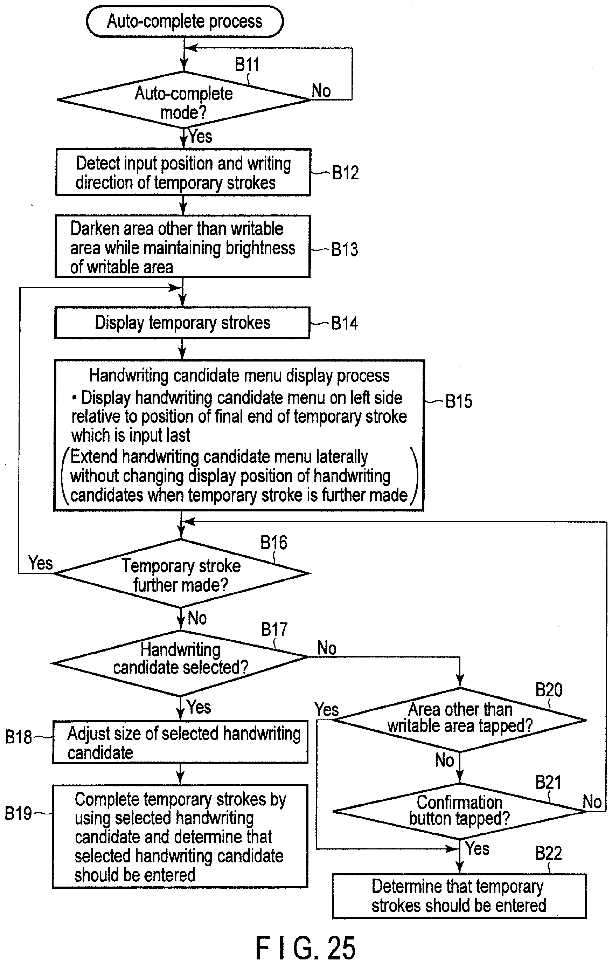

FIG. 25 is an exemplary flow chart showing the steps of the auto-complete process which is executed by the tablet 10 when the handwritten note application program 202 is executed by the CPU 101.

In a case where the auto-complete mode is turned on (YES in block B11), when a temporary stroke is input, the processing module 308 of the handwritten note application program 202 detects the input position and the writing direction of the temporary stroke (block B12). For example, the processing module 308 darkens the area other than the writable area 801 while maintaining the brightness of the writable area 801 having a band shape which is long in the input direction of the character corresponding to the temporary stroke (block B13). The processing module 308 displays the temporary stroke in the writable area 801 (block B14). The step of block B13 may be performed after the temporary stroke is displayed.

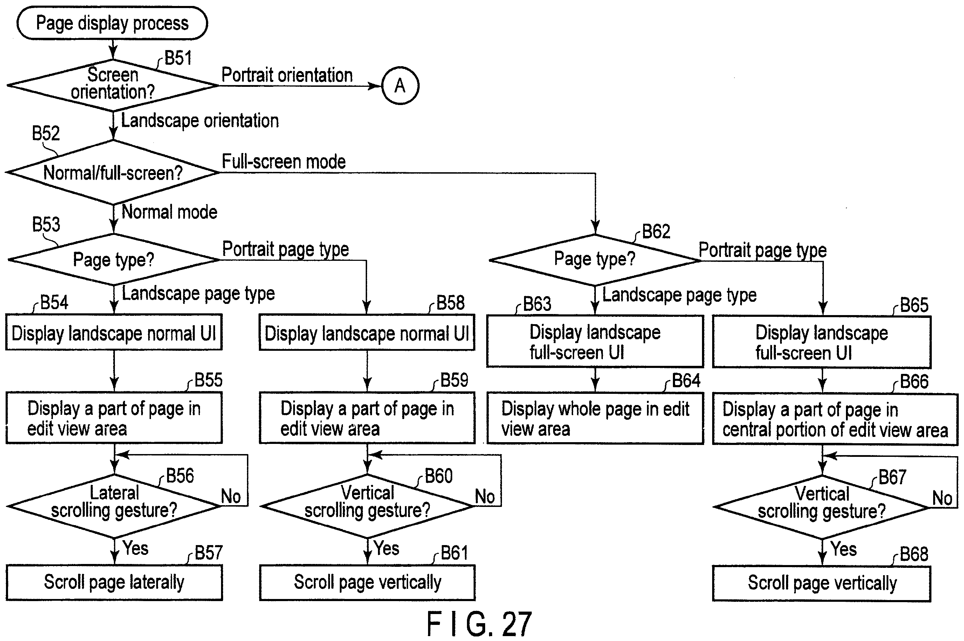

Next, the processing module 308 performs a handwriting candidate menu display process (block B15). The detail steps of this process are shown in FIG. 27.

In the handwriting candidate menu display process, the processing module 308 displays a handwriting candidate menu containing some handwriting candidates determined from temporary strokes on the left side relative to the position of the final end (or right end) of the temporary stroke which is input last. The processing module 308 checks whether or not a temporary stroke is further made (block B16). When a temporary stroke is further made (YES in block B16), the steps of block B14 to block B15 are performed again. In the handwriting candidate menu display process (block B15) when a temporary stroke is further made, the processing module 308 may extend the handwriting candidate menu in the lateral direction without changing the display position of handwriting candidates. In this case, the processing module 308 may determine whether or not the same handwriting candidate is included in the handwriting candidate group determined from the first temporal stroke and the handwriting candidate group determined from the first temporary stroke and the second temporary stroke. On the condition that the same handwriting candidate is included in the groups, the processing module 308 may execute a process for laterally extending (enlarging) the handwriting candidate menu without changing the display position of the same handwriting candidate.

When no temporary stroke is further made (NO in block B16), the processing module 308 checks whether or not a handwriting candidate is selected from the handwriting candidates in the handwriting candidate menu (block B17). When a handwriting candidate is selected (YES in block B17), the processing module 308 adjusts the size of the selected handwriting candidate (block B18), completes the temporary strokes by using the selected handwriting candidate, and determines that the selected handwriting candidate should be entered (block B19). In block B19, in place of the temporary strokes, the selected handwriting candidate is entered (input) on the page.

When none of the handwriting candidates is selected (NO in block B17), the processing module 308 checks whether or not the area other than the writable area is tapped (block B20) and whether or not the conformation button is tapped (block B21). When one of the tap in the area other than the writable area and the tap of the confirmation button is executed (YES in block B20 or YES in block B21), the processing module 308 determines that the temporary strokes should be entered (block B22). When neither the tap in the area other than the writable area nor the tap of the confirmation button is performed (NO in block B20 and NO in block N21), the processing module 308 returns to block B16 and checks whether or not a temporary stroke is further made.

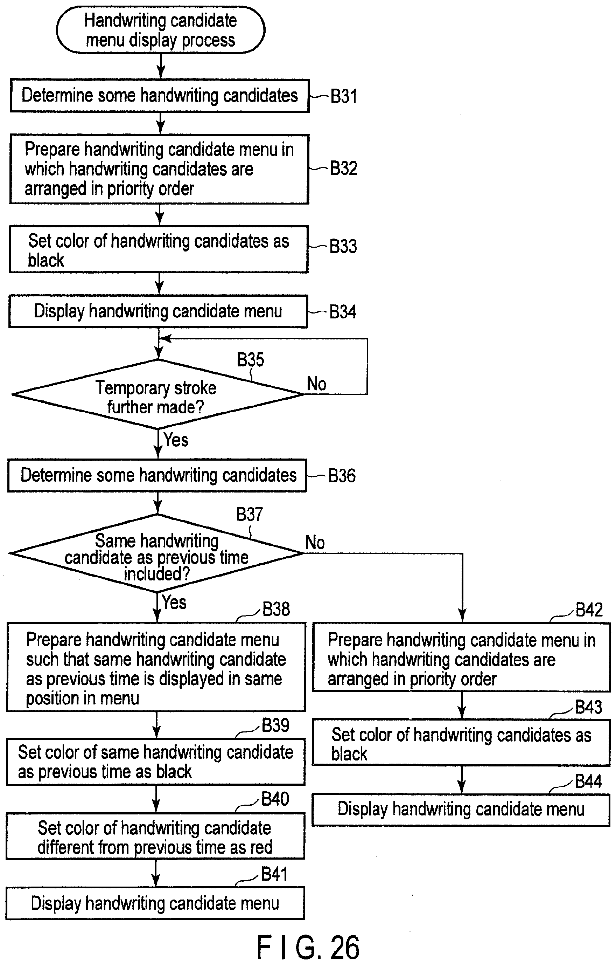

FIG. 26 is an exemplary flowchart showing the steps of the handwriting candidate menu display process which is executed by the tablet 10 when the handwritten note application program 202 is executed by the CPU 101.

The processing module 308 of the handwritten note application program 202 determines some handwriting candidates based on the input temporary stroke (block B31), and prepares a handwriting candidate menu in which the handwriting candidates are arranged in the priority order (block B32). The processing module 308 sets the color of the handwriting candidates as black (block B33), and displays the handwriting candidate menu (block B34).

The processing module 308 checks whether or not a temporary stroke is further made (block B35). When a temporary stroke is further made (YES in block B35), the processing module 308 determines some new handwriting candidates based on the temporary strokes which are initially input and the temporary stroke which is additionally input (block B36), and checks whether or not the same handwriting candidate as the previous time is included in the new handwriting candidates (block B37).

When the same handwriting candidate is included (YES in block B37), the processing module 308 prepares the handwriting candidate menu such that the same handwriting candidate as the previous time is displayed in the same display position (the same button area) in the handwriting candidate menu (block B38). The processing module 308 sets the color of the same handwriting candidate as the previous time as black (block B39), sets the color of a handwriting candidate different from the previous time as red (block B40), and displays the handwriting candidate menu (block B41) .

When no same handwriting candidate is included (NO in block B37), the processing module 308 prepares the handwriting candidate menu in which the handwriting candidates are arranged in the priority order (block B42). The processing module 308 sets the color of the handwriting candidates as black (block B43), and displays the handwriting candidate menu (block B44).

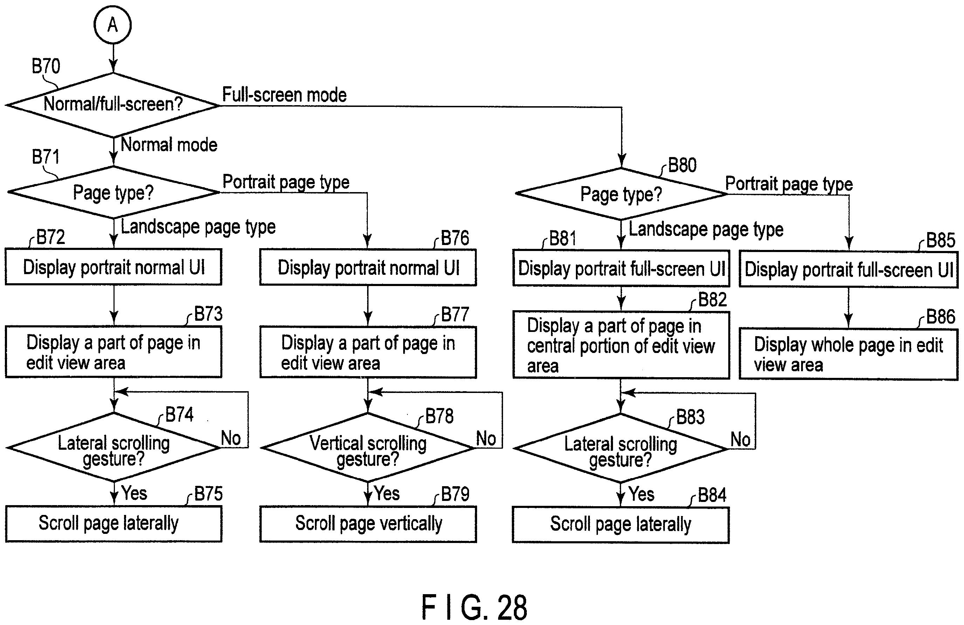

FIG. 27 and FIG. 28 are exemplary flowcharts showing the steps of the page display process which is executed by the tablet 10 when the handwritten note application program 202 is executed by the CPU 101.

The processing module 308 of the handwritten note application program 202 firstly checks whether the orientation of the screen is the landscape orientation or the portrait orientation (block B51). FIG. 27 shows steps when the orientation of the screen is the landscape orientation. FIG. 28 shows steps when the orientation of the screen is the portrait orientation. First, with reference to FIG. 27, this specification explains the steps when the orientation of the screen is the landscape orientation.

When the orientation of the screen is the landscape orientation, the processing module 308 checks whether the UI (edit view) is in the normal mode or in the full-screen mode (block B52). In the normal mode, the processing module 308 checks whether the type of the page to be displayed is the landscape page type or the portrait page type (block B53).

When the page type is the landscape page.type, the processing module 308 displays the landscape normal UI (block B54) and displays a part of the landscape page in the edit view area (block B55). When a lateral scrolling gesture is performed (YES in block B56), the processing module 308 laterally scrolls the landscape page (block B57). When the page type is the portrait page type, the processing module 308 displays the landscape normal UI (block B58) and displays a part of the portrait page in the edit view area (block B59). When a vertical scrolling gesture is performed (YES in block B60), the processing module 308 vertically scrolls the portrait page (block B57).

In the full-screen mode, the processing module 308 checks whether the page type is the landscape page type or the portrait page type (block B62).

When the page type is the landscape page type, the processing module 308 displays the landscape full-screen UI (block B63) and displays the whole landscape page in the edit view area (block B64). When the page type is the portrait page type, the processing module 308 displays the landscape full-screen UI (block B65) and displays a part of the portrait page in the central portion of the edit view area (block B66). When a vertical scrolling gesture is performed (YES in block B67), the portrait page is vertically scrolled (block B68) .

Now, this specification explains the steps when the orientation of the screen is the portrait orientation with reference to FIG. 28.

When the orientation of the screen is the portrait orientation, the processing module 308 checks whether the mode is set as the normal mode or the full-screen mode (block B70). In the normal mode, the processing module 308 checks whether the page type is the landscape page type or the portrait page type (block B71) .

When the page type is the landscape page type, the processing module 308 displays the portrait normal UI (block B72) and displays a part of the landscape page in the edit view area (block B73). When a lateral scrolling gesture is performed (YES in block B74), the landscape page is laterally scrolled (block B75). When the page type is the portrait page type, the processing module 308 displays the portrait normal UI (block B76) and displays a part of the portrait page in the edit view area (block B77). When a vertical scrolling gesture is performed (YES in block B78), the portrait page is vertically scrolled (block B79).

In the full-screen mode, the processing module 308 checks whether the page type is the landscape page type or the portrait page type (block B80).

When the page type is the landscape page type, the processing module 308 displays the portrait full-screen UI (block B81) and displays a part of the landscape page in the central portion of the edit view area (block B82). When a lateral scrolling gesture is performed (YES in block B83), the landscape page is laterally scrolled (block B68). When the page type is the portrait page type, the processing module 308 displays the portrait full-screen UI (block B88) and displays the whole portrait page in the edit view area (block B86).

When the displayed page is a landscape page, the scrollable direction is always restricted to the lateral direction. When the displayed page is a portrait page, the scrollable direction is always restricted to the vertical direction. In this manner, it is possible to prevent unintended scrolling of the page during a handwriting input operation.

As explained above, in the present invention, the writable area including the display area of temporary strokes is displayed in a display style different from the other area. The other area is used as an operation area for determining that the temporary strokes should be entered. Thus, the operation to determine the temporary strokes as the entered strokes becomes easy. It is possible to realize smooth handwriting input.

Various functions described in the present embodiment may be realized by circuitry (processing circuitry). For example, the processing circuitry includes a programmed processor such as a central processing unit (CPU). The processor executes each of the described functions by executing a computer program (a group of instructions) stored in the memory. The processor may be a microprocessor including an electric circuitry. For example, the processing circuitry further includes a digital signal processor (DSP), an application-specific integrated circuit (ASIC), a microcontroller, a controller and other electronic circuitry components. Each of the components described in the present embodiment other than the CPU may be also realized by a processing circuitry.

Each process described in the present embodiment can be realized by a computer program. Therefore, an effect similar to the present embodiment can be easily realized by merely installing the computer program into a computer through a computer-readable storage medium in which the computer program is stored, and executing the computer program.

The CPU in the computer into which the computer program is installed can function as a processor configured to execute the above-described handwriting complete process. The GPU in the computer can function as a display processor configured to display each stroke on the screen.

In the present embodiment, a tablet computer is used as an example. However, the handwritten document processing function of the present embodiment can be applied to a normal desktop personal computer. In this case, for example, a tablet which is an input device for handwriting input may be connected to a desktop personal computer.

## Claims

1. An electronic device comprising:
display controlling means (104, 308) for, when a first stroke is inputted on an edit view area (504) of a display (17), displaying an elongate first area (801) in a first style, the first area (801) including a display area of the first stroke and having a band shape which is long in a direction in which a handwritten
character corresponding to the first stroke is written, displaying a second area (805) in a second style different from the first style, the second area (805) being the area of the edit view area (504) other than the first area (801), and displaying one or more first handwriting candidates on the display (17) by searching an auto-complete dictionary based on the first stroke, the first handwriting candidates comprising words which begin with the character corresponding to the first stroke; and
processing means (101, 308) for entering, when one of the first handwriting candidates is selected, the word of the selected first handwriting candidate in place of the character corresponding to the first stroke, wherein the processing means (101, 308) is configured to enter the first stroke when the second area (805) is operated.

2. The electronic device of Claim 1, wherein
the display controlling means (104, 308) is configured to display, when a second stroke is inputted on the display (17) after the first stroke is inputted, one or more second handwriting candidates based on the first stroke and the second stroke on the display (17), the second handwriting candidates comprising words which begin with characters corresponding to the first stroke and the second stroke, and
the display controlling means (104, 308) is configured to enlarge, when the words of the one or more first handwriting candidates and the words of the one or more second handwriting candidates include at least one identical word, an area for operation for selecting the handwriting candidate comprising the identical word based on the second stroke without changing a display position of the handwriting candidate comprising the identical word.

3. The electronic device of Claim 1, wherein
the display controlling means (104, 308) is configured to display, when a second stroke is inputted on the display (17) after the first stroke is inputted, a plurality of second handwriting candidates based on the first stroke and the second stroke on the display (17), the second handwriting candidates comprising words which begin with characters corresponding to the first stroke and the second stroke,
the display controlling means (104, 308) is configured to display out of the plurality of second handwriting candidates, handwriting candidates which comprise words identical to words of the one or more first handwriting candidates, in a third style on the display (17), and
the display controlling means (104, 308) is configured to display, out of the plurality of second handwriting candidates, handwriting candidates which comprise words different from words of the one or more first handwriting candidates, in a fourth style different from the third style on the display (17).

4. The electronic device of Claim 1, wherein
the display controlling means (104, 308) is configured to accept a setting for a right-handed user or a left-handed user, and to display the one or more first handwriting candidates on a left side relative to a position of the first stroke in the setting for a right-handed user and on a right side relative to the position of the first stroke in the setting for a left-handed user.

5. The electronic device of Claim 1, wherein
the display (17) has a rectangular shape and is mounted on the electronic device,
the display controlling means (104, 308) is configured to automatically change a display direction of the display image to at least a first direction and a second direction based on an orientation of the electronic device, the first direction intersecting the second direction by 90 degrees,
when a stroke input page, which is a page displayed in the edit view area (541) and allowing strokes including the first stroke to be inputted, is a landscape page which has a laterally-long rectangular shape, the processing means (101, 308) is configured to scroll the page only in the lateral direction regardless of the first direction or the second direction of the display direction, and
when the page is a portrait page which has a vertically-long rectangular shape, the processing means (101, 308) is configured to scroll the page only in a vertical direction regardless of the first direction or the second direction of the display direction of the display (17).

6. A method comprising: when a first stroke is inputted on an edit view area (504) of a display (17),
displaying an elongate first area (801) in a first style and displaying a second area (805) in a second style different from the first style, the first area (801) including a display area of the first stroke and having a band shape which is long in a direction in which a handwritten character corresponding to the first stroke is written, the second area (805) being the area of the edit view area (504) other than the first area (801) ;
displaying one or more first handwriting candidates on the display (17) by searching an auto-complete dictionary based on the first stroke, the first handwriting candidates comprising words which begin with the character corresponding to the first stroke;
entering, when one of the first handwriting candidates is selected, the word of the selected first handwriting candidate in place of the character corresponding to the first stroke; and
entering the first stroke when the second area (805) is operated.

7. The method of Claim 6, further comprising:
displaying, when a second stroke is inputted on the display (17) after the first stroke is inputted, one or more second handwriting candidates based on the first stroke and the second stroke on the display (17), the second handwriting candidates comprising words which begin with characters corresponding to the first stroke and the second stroke; and
enlarging, when the words of the one or more first handwriting candidates and the words of the one or more second handwriting candidates include at least one identical word, an area for operation for selecting the handwriting candidate comprising the identical word based on the second stroke without changing a display position of the handwriting candidate comprising the identical word.

8. The method of Claim 6, further comprising:
displaying, when a second stroke is inputted on the display (17) after the first stroke is inputted, a plurality of second handwriting candidates based on the first stroke and the second stroke on the display (17), the second handwriting candidates comprising words which begin with characters corresponding to the first stroke and the second stroke;
displaying, out of the plurality of second handwriting candidates, handwriting candidates which comprise words identical to words of the one or more first handwriting candidates, in a third style on the display (17); and
displaying, out of the plurality of second handwriting candidates, handwriting candidates which comprise words different from words of the one or more first handwriting candidates, in a fourth style different from the third style on the display (17).

9. The method of Claim 6, further comprising:
accepting a setting for a right-handed user or a left-handed user; and
displaying the one or more first handwriting on a left side relative to a position of the first stroke in the setting for a right-handed user and on a right side relative to the position of the first stroke in the setting for a left-handed user.

10. The method of Claim 6, wherein
the display (17) has a rectangular shape and is mounted on an electronic device,
changing a display direction of the display image automatically to at least a first direction and a second direction based on an orientation of the electronic device, the first direction intersecting the second direction by 90 degrees;
when a stroke input page, which is a page displayed in the edit view area (541) and allowing strokes including the first stroke to be inputted, is a landscape page which has a laterally-long rectangular shape, allowing the page to be scrolled only in a lateral direction regardless of the first direction or the second direction of the display direction, and
when the page is a portrait page which has a vertically-long rectangular shape, allowing the page to be scrolled only in a vertical direction regardless of the first direction or the second direction of the display direction.

11. A computer program which is executable by a computer, the computer program controlling the computer to execute the method of claim 6.

12. The computer program of Claim 11, the program further controlling the computer to execute functions of:
displaying, when a second stroke is inputted on the display (17) after the first stroke is inputted, one or more second handwriting candidates based on the first stroke and the second stroke on the display (17), the second handwriting candidates comprising words which begin with characters corresponding to the first stroke and the second stroke; and
enlarging, when the words of the one or more first handwriting candidates and the words of the one or more second handwriting candidates include at least one identical word, an area for operation for selecting the handwriting candidate comprising the identical word based on the second stroke without changing a display position of the handwriting candidate comprising the identical word.

13. The computer program of Claim 11, the program further controlling the computer to execute functions of:
displaying, when a second stroke is inputted on the display (17) after the first stroke is inputted, a plurality of second handwriting candidates based on the first stroke and the second stroke on the display (17), the second handwriting candidates comprising words which begin with characters corresponding to the first stroke and the second stroke;
displaying, out of the plurality of second handwriting candidates, handwriting candidates which comprise words identical to words of the one or more first handwriting candidates, in a third style on the display (17); and
displaying, out of the plurality of second handwriting candidates, handwriting candidates which comprise words different from words of the one or more first handwriting candidates, in a fourth style different from the third style on the display (17).

14. The computer program of Claim 11, the program further controlling the computer to execute functions of:
accepting a setting for a right-handed user or a left-handed user; and
displaying the one or more first handwriting on a left side relative to a position of the first stroke in the setting for a right-handed user and on a right side relative to the position of the first stroke in the setting for a left-handed user.

15. The computer program of Claim 11, wherein
the display (17) has a rectangular shape and is mounted on an electronic device, and
the program further controls the computer to execute functions of:
changing a display direction of the display image automatically to at least a first direction and a second direction based on an orientation of the electronic device, the first direction intersecting the second direction by 90 degrees;
when a stroke input page, which is a page displayed in the edit view area (541) and allowing strokes including the first stroke to be inputted, is a landscape page which has a laterally-long rectangular shape, allowing the page to be scrolled only in a lateral direction regardless of the first direction or the second direction of the display direction, and
when the page is a portrait page which has a vertically-long rectangular shape, allowing the page to be scrolled only in a vertical direction regardless of the first direction or the second direction of the display direction.

## Patentansprüche

1. Elektronische Vorrichtung, aufweisend:
Anzeigesteuerungsmittel (104, 308) zum, wenn ein erster Strich auf einem Editieransichtsgebiet (504) einer Anzeige (17) eingegeben ist, Anzeigen eines vergrößerten ersten Gebiets (801) in einem ersten Stil, wobei das erste Gebiet (801) ein Anzeigebiet des ersten Strichs umfasst und eine Bandform aufweist, welche in einer Richtung lang ist, in welcher ein handschriftliches Zeichen korrespondierend zu dem ersten Strich geschrieben ist, Anzeigen eines zweiten Gebiets (805) in einem von dem ersten Stil verschiedenen zweiten Stil, wobei das zweite Gebiet (805) das von dem ersten Gebiet (801) verschiedene Gebiet des Editieransichtsgebiets (504) ist, und Anzeigen eines oder mehrerer erster handschriftlicher Kandidaten auf der Anzeige (17), indem ein Auto-Vervollständigungswörterbuch basierend auf dem ersten Strich durchsucht wird, wobei die ersten handschriftlichen Kandidaten Wörter aufweisen, welche mit dem Zeichen korrespondierend zu dem ersten Strich beginnen; und
Verarbeitungsmittel (101, 308) zum Eingeben, wenn einer der ersten handschriftlichen Kandidaten ausgewählt ist, des Wortes des ausgewählten ersten handschriftlichen Kandidaten anstelle des Zeichens korrespondierend zu dem ersten Strich, wobei die Verarbeitungsmittel (101, 308) konfiguriert sind, um den ersten Strich einzugeben, wenn das zweite Gebiet (805) bedient wird.

2. Elektronische Vorrichtung nach Anspruch 1, wobei
die Anzeigesteuerungsmittel (104, 308) konfiguriert sind, um, wenn ein zweiter Strich auf der Anzeige (17) eingegeben wird, nachdem der erste Strich eingegeben worden ist, einen oder mehrere zweite handschriftliche Kandidaten basierend auf dem ersten Strich und dem zweiten Strich auf der Anzeige (17) anzuzeigen, wobei die zweiten handschriftlichen Kandidaten Wörter aufweisen, welche mit Zeichen korrespondierend zu dem ersten Strich und dem zweiten Strich beginnen, und
die Anzeigesteuerungsmittel (104, 308) konfiguriert sind, um, wenn die Wörter des einen oder der mehreren ersten handschriftlichen Kandidaten und die Wörter des einen oder der mehreren zweiten handschriftlichen Kandidaten zumindest ein identisches Wort umfassen, ein Gebiet zur Bedienung zu vergrößern, um den handschriftlichen Kandidaten mit dem identischen Wort basierend auf dem zweiten Strich auszuwählen, ohne eine Anzeigeposition des handschriftlichen Kandidaten mit dem identischen Wort zu ändern.

3. Elektronische Vorrichtung nach Anspruch 1, wobei
die Anzeigesteuerungsmittel (104, 308) konfiguriert sind, um, wenn ein zweiter Strich auf der Anzeige (17) eingegeben wird, nachdem der erste Strich eingegeben worden ist, eine Vielzahl von zweiten handschriftlichen Kandidaten basierend auf dem ersten Strich und dem zweiten Strich auf der Anzeige (17) anzuzeigen, wobei die zweiten handschriftlichen Kandidaten Wörter aufweisen, welche mit Zeichen korrespondierend zu dem ersten Strich und dem zweiten Strich beginnen,
die Anzeigesteuerungsmittel (104, 308) konfiguriert sind, um aus der Vielzahl von zweiten handschriftlichen Kandidaten handschriftliche Kandidaten in einem dritten Stil auf der Anzeige (17) anzuzeigen, welche Wörter aufweisen, die zu den Wörtern des einen oder der mehreren ersten handschriftlichen Kandidaten identisch sind, und
die Anzeigesteuerungsmittel (104, 308) konfiguriert sind, um, aus der Vielzahl von zweiten handschriftlichen Kandidaten, handschriftliche Kandidaten in einem von dem dritten Stil verschiedenen vierten Stil auf der Anzeige (17) anzuzeigen, welche Wörter aufweisen, die von Wörtern des einen oder der mehreren ersten handschriftlichen Kandidaten verschieden sind.

4. Elektronische Vorrichtung nach Anspruch 1, wobei
die Anzeigesteuerungsmittel (104, 308) konfiguriert sind, um eine Einstellung für einen rechtshändigen Benutzer oder einen linkshändigen Benutzer zu akzeptieren, und um den einen oder die mehreren ersten handschriftlichen Kandidaten auf einer linken Seite relativ zu einer Position des ersten Strichs bei der Einstellung für einen rechtshändigen Benutzer und auf einer rechten Seite relativ zu der Position des ersten Strichs bei der Einstellung für einen linkshändigen Benutzer anzuzeigen.

5. Elektronische Vorrichtung nach Anspruch 1, wobei
die Anzeige (17) eine rechteckige Form aufweist und an der elektronischen Vorrichtung angebracht ist,
die Anzeigesteuerungsmittel (104, 308) konfiguriert sind, um eine Anzeigerichtung des Anzeigebildes zu zumindest einer ersten Richtung und einer zweiten Richtung basierend auf einer Orientierung der elektronischen Vorrichtung automatisch zu ändern, wobei die erste Richtung die zweite Richtung um 90 Grad kreuzt,
wenn eine Stricheingabeseite, welche eine in dem Editieransichtsgebiet (541) angezeigte Seite ist und zulässt, dass Striche einschließlich des ersten Strichs eingegeben werden, eine Landschaftsseite ist, welche eine lateral lange rechteckige Form aufweist, die Verarbeitungsmittel (101, 308) konfiguriert sind, um die Seite lediglich in der Lateralrichtung ungeachtet der ersten Richtung oder der zweiten Richtung der Anzeigerichtung zu scrollen, und
wenn die Seite eine Portraitseite ist, welche eine vertikal lange rechteckige Form aufweist, die Verarbeitungsmittel (101, 308) konfiguriert sind, um die Seite lediglich in einer Vertikalrichtung ungeachtet der ersten Richtung oder der zweiten Richtung der Anzeigerichtung der Anzeige (17) zu scrollen.

6. Verfahren, aufweisend:
wenn ein erster Strich auf einem Editieransichtsgebiet (504) einer Anzeige (17) eingegeben wird, Anzeigen eines vergrößerten ersten Gebiets (801) in einem ersten Stil, und Anzeigen eines zweiten Gebiets (805) in einem von dem ersten Stil verschiedenen zweiten Stil, wobei das erste Gebiet (801) ein Anzeigegebiet des ersten Strichs umfasst und eine Bandform aufweist, welche in einer Richtung lang ist, in welcher ein handschriftliches Zeichen korrespondierend zu dem ersten Strich geschrieben ist, wobei das zweite Gebiet (805) das von dem ersten Gebiet (801) verschiedene Gebiet des Editieransichtsgebiets (504) ist;
Anzeigen eines oder mehrerer erster handschriftlicher Kandidaten auf der Anzeige (17), indem ein Auto-Vervollständigungswörterbuch basierend auf dem ersten Strich durchsucht wird, wobei die ersten handschriftlichen Kandidaten Wörter aufweisen, welche mit dem Zeichen korrespondierend zu dem ersten Strich beginnen;
Eingeben, wenn einer der ersten handschriftlichen Kandidaten ausgewählt ist, des Wortes des ausgewählten ersten handschriftlichen Kandidaten anstelle des Zeichens korrespondierend zu dem ersten Strich; und
Eingeben des ersten Strichs, wenn das zweite Gebiet (805) bedient wird.

7. Verfahren nach Anspruch 6, ferner aufweisend:
Anzeigen, wenn ein zweiter Strich auf der Anzeige (17) eingegeben wird, nachdem der erste Strich eingegeben worden ist, eines oder mehrerer zweiter handschriftlicher Kandidaten basierend auf dem ersten Strich und dem zweiten Strich auf der Anzeige (17), wobei die zweiten handschriftlichen Kandidaten Wörter aufweisen, welche mit Zeichen korrespondierend zu dem ersten Strich und dem zweiten Strich beginnen; und
Vergrößern, wenn die Wörter des einen oder der mehreren ersten handschriftlichen Kandidaten und die Wörter des einen oder der mehreren zweiten handschriftlichen Kandidaten zumindest ein identisches Wort umfassen, eines Gebiets zur Bedienung, um den handschriftlichen Kandidaten mit dem identischen Wort basierend auf dem zweiten Strich auszuwählen, ohne eine Anzeigeposition des handschriftlichen Kandidaten mit dem identischen Wort zu ändern.

8. Verfahren nach Anspruch 6, ferner aufweisend:
Anzeigen, wenn ein zweiter Strich auf der Anzeige (17) eingegeben wird, nachdem der erste Strich eingegeben worden ist, einer Vielzahl von zweiten handschriftlichen Kandidaten basierend auf dem ersten Strich und dem zweiten Strich auf der Anzeige (17), wobei die zweiten handschriftlichen Kandidaten Wörter aufweisen, welche mit Zeichen korrespondierend zu dem ersten Strich und dem zweiten Strich beginnen;
Anzeigen, aus der Vielzahl von zweiten handschriftlichen Kandidaten, von handschriftlichen Kandidaten, welche Wörter aufweisen, die identisch zu Wörtern des einen oder der mehreren ersten handschriftlichen Kandidaten sind, in einem dritten Stil auf der Anzeige (17); und
Anzeigen, aus der Vielzahl von zweiten handschriftlichen Kandidaten, von handschriftlichen Kandidaten, welche Wörter aufweisen, die von Wörtern des einen oder der mehreren ersten handschriftlichen Kandidaten verschieden sind, in einem von dem dritten Stil verschiedenen vierten Stil auf der Anzeige (17) .

9. Verfahren nach Anspruch 6, ferner aufweisend:
Akzeptieren einer Einstellung für einen rechtshändigen Benutzer oder einen linkshändigen Benutzer; und
Anzeigen des einen oder der mehreren ersten handschriftlichen Kandidaten auf einer linken Seite relativ zu einer Position des ersten Strichs bei der Einstellung für einen rechtshändigen Benutzer und auf einer rechten Seite relativ zu der Position des ersten Strichs bei der Einstellung für einen linkshändigen Benutzer.

10. Verfahren nach Anspruch 6, wobei
die Anzeige (17) eine rechteckige Form aufweist und an einer elektronischen Vorrichtung angebracht ist,
automatisches Ändern einer Anzeigerichtung des Anzeigebildes zu zumindest einer ersten Richtung und einer zweiten Richtung basierend auf einer Orientierung der elektronischen Vorrichtung, wobei die erste Richtung die zweite Richtung um 90 Grad kreuzt;
wenn eine Stricheingabeseite, welche eine in dem Editieransichtsgebiet (541) angezeigte Seite ist und zulässt, dass Striche einschließlich des ersten Strichs eingegeben werden, eine Landschaftsseite ist, welche eine lateral lange rechteckige Form aufweist, Zulassen, dass die Seite lediglich in einer Lateralrichtung ungeachtet der ersten Richtung oder der zweiten Richtung der Anzeigerichtung gescrollt wird, und
wenn die Seite eine Portraitseite ist, welche eine vertikal lange rechteckige Form aufweist, Zulassen, dass die Seite lediglich in einer Vertikalrichtung ungeachtet der ersten Richtung oder der zweiten Richtung der Anzeigerichtung gescrollt wird.

11. Computerprogramm, welches durch einen Computer ausführbar ist, wobei das Computerprogramm den Computer steuert, um das Verfahren nach Anspruch 6 auszuführen.

12. Computerprogramm nach Anspruch 11, wobei das Programm ferner den Computer steuert, um die folgenden Funktionen auszuführen:
Anzeigen, wenn ein zweiter Strich auf der Anzeige (17) eingegeben wird, nachdem der erste Strich eingegeben worden ist, eines oder mehrerer zweiter handschriftlicher Kandidaten basierend auf dem ersten Strich und dem zweiten Strich auf der Anzeige (17), wobei die zweiten handschriftlichen Kandidaten Wörter aufweisen, welche mit Zeichen korrespondierend zu dem ersten Strich und dem zweiten Strich beginnen; und
Vergrößern, wenn die Wörter des einen oder der mehreren ersten handschriftlichen Kandidaten und die Wörter des einen oder der mehreren zweiten handschriftlichen Kandidaten zumindest ein identisches Wort umfassen, eines Gebiets zur Bedienung, um den handschriftlichen Kandidaten mit dem identischen Wort basierend auf dem zweiten Strich auszuwählen, ohne eine Anzeigeposition des handschriftlichen Kandidaten mit dem identischen Wort zu ändern.

13. Computerprogramm nach Anspruch 11, wobei das Programm ferner den Computer steuert, um die folgenden Funktionen auszuführen:
Anzeigen, wenn ein zweiter Strich auf der Anzeige (17) eingegeben wird, nachdem der erste Strich eingegeben worden ist, einer Vielzahl von zweiten handschriftlichen Kandidaten basierend auf dem ersten Strich und dem zweiten Strich auf der Anzeige (17), wobei die zweiten handschriftlichen Kandidaten Wörter aufweisen, welche mit Zeichen korrespondierend zu dem ersten Strich und dem zweiten Strich beginnen;
Anzeigen, aus der Vielzahl von zweiten handschriftlichen Kandidaten, von handschriftlichen Kandidaten, welche Wörter identisch zu Wörtern des einen oder der mehreren ersten handschriftlichen Kandidaten aufweisen, in einem dritten Stil auf der Anzeige (17); und
Anzeigen, aus der Vielzahl von zweiten handschriftlichen Kandidaten, von handschriftlichen Kandidaten, welche Wörter aufweisen, die von Wörtern des einen oder der mehreren ersten handschriftlichen Kandidaten verschieden sind, in einem von dem dritten Stil verschiedenen vierten Stil auf der Anzeige (17) .

14. Computerprogramm nach Anspruch 11, wobei das Programm ferner den Computer steuert, um die folgenden Funktionen auszuführen:
Akzeptieren einer Einstellung für einen rechtshändigen Benutzer oder einen linkshändigen Benutzer; und
Anzeigen des einen oder der mehreren ersten handschriftlichen Kandidaten auf einer linken Seite relativ zu einer Position des ersten Strichs bei der Einstellung für einen rechtshändigen Benutzer und auf einer rechten Seite relativ zu der Position des ersten Strichs bei der Einstellung für einen linkshändigen Benutzer.

15. Computerprogramm nach Anspruch 11, wobei
die Anzeige (17) eine rechteckige Form aufweist und an einer elektronischen Vorrichtung angebracht ist, und
das Programm ferner den Computer steuert, um die folgenden Funktionen auszuführen:
automatisches Ändern einer Anzeigerichtung des Anzeigebildes zu zumindest einer ersten Richtung und einer zweiten Richtung basierend auf einer Orientierung der elektronischen Vorrichtung, wobei die erste Richtung die zweite Richtung um 90 Grad kreuzt;
wenn eine Stricheingabeseite, welche eine in dem Editieransichtsgebiet (541) angezeigte Seite ist und zulässt, dass Striche einschließlich des ersten Strichs eingegeben werden, eine Landschaftsseite ist, welche eine lateral lange rechteckige Form aufweist, Zulassen, dass die Seite lediglich in einer Lateralrichtung ungeachtet der ersten Richtung oder der zweiten Richtung der Anzeigerichtung gescrollt wird, und
wenn die Seite eine Portraitseite ist, welche eine vertikal lange rechteckige Form aufweist, Zulassen, dass die Seite lediglich in einer Vertikalrichtung ungeachtet der ersten Richtung oder der zweiten Richtung der Anzeigerichtung gescrollt wird.

## Revendications

1. Dispositif électronique, comprenant :
un moyen de commande d'affichage (104, 308), destiné, lorsqu'un premier trait est saisi sur une zone de visualisation d'édition (504) d'un dispositif d'affichage (17), à afficher une première zone allongée (801) dans un premier style, la première zone (801) incluant une zone d'affichage du premier trait et ayant une forme de bande qui est longue dans un sens dans lequel est écrit un caractère manuscrit correspondant au premier trait, à afficher une seconde zone (805) dans un deuxième style, différent du premier style, la seconde zone (805) étant la zone de la zone de visualisation d'édition (504) autre que la première zone (801), et à afficher un ou plusieurs premier(s) candidat(s) d'écriture manuscrite sur le dispositif d'affichage (17) en effectuant une recherche dans un dictionnaire de saisie semi-automatique sur la base du premier trait, les premiers candidats d'écriture manuscrite comprenant des mots qui commencent par le caractère correspondant au premier trait ; et
un moyen de traitement (101, 308) destiné à introduire, lorsque l'un des premiers candidats d'écriture manuscrite est sélectionné, le mot du premier candidat d'écriture manuscrite sélectionné, à la place du caractère correspondant au premier trait, dans lequel le moyen de traitement (101, 308) est conçu pour introduire le premier trait lorsque la seconde zone (805) est utilisée.

2. Dispositif électronique selon la revendication 1, dans lequel :
le moyen de commande d'affichage (104, 308) est conçu pour afficher, lorsqu'un second trait est saisi sur le dispositif d'affichage (17), après que le premier trait a été saisi, un ou plusieurs seconds(s) candidat(s) d'écriture manuscrite, sur la base du premier trait et du second trait, sur le dispositif d'affichage (17), les seconds candidats d'écriture manuscrite comprenant des mots qui commencent par des caractères correspondant au premier trait et au second trait, et
le moyen de commande d'affichage (104, 308) est conçu pour agrandir, lorsque les mots du ou des premier(s) candidat(s) d'écriture manuscrite et les mots du ou des second(s) candidat(s) d'écriture manuscrite incluent au moins un mot identique, une zone d'opération permettant de sélectionner le candidat d'écriture manuscrite comprenant le mot identique sur la base du second trait sans changer une position d'affichage du candidat d'écriture manuscrite comprenant le mot identique.

3. Dispositif électronique selon la revendication 1, dans lequel :
le moyen de commande d'affichage (104, 308) est conçu pour afficher, lorsqu'un second trait est saisi sur le dispositif d'affichage (17), après que le premier trait a été saisi, une pluralité seconds candidats d'écriture manuscrite, sur la base du premier trait et du second trait, sur le dispositif d'affichage (17), les seconds candidats d'écriture manuscrite comprenant des mots qui commencent par des caractères correspondant au premier trait et au second trait,
le moyen de commande d'affichage (104, 308) est conçu pour afficher, parmi la pluralité de seconds candidats d'écriture manuscrite, des candidats d'écriture manuscrite qui comprennent des mots identiques à des mots du ou des premier(s) candidat(s) d'écriture manuscrite, dans un troisième style, sur le dispositif d'affichage (17), et
le moyen de commande d'affichage (104, 308) est conçu pour afficher, parmi la pluralité de seconds candidats d'écriture manuscrite, des candidats d'écriture manuscrite qui comprennent des mots différents de mots du ou des premier (s) candidat(s) d'écriture manuscrite, dans un quatrième style, différent du troisième style, sur le dispositif d'affichage (17).

4. Dispositif électronique selon la revendication 1, dans lequel :
le moyen de commande d'affichage (104, 308) est conçu pour accepter un réglage destiné à un utilisateur droitier ou à un utilisateur gaucher, et pour afficher le (s) premier(s) candidat(s) d'écriture manuscrite sur un côté gauche par rapport à une position du premier trait, dans le cas du réglage destiné à un utilisateur droitier et sur un côté droit par rapport à la position du premier trait, dans le cas du réglage destiné à un utilisateur gaucher.

5. Dispositif électronique selon la revendication 1, dans lequel :
le dispositif d'affichage (17) a une forme rectangulaire et est monté sur le dispositif électronique,
le dispositif de commande d'affichage (104, 308) est conçu pour faire passer automatiquement un sens d'affichage de l'image d'affichage à au moins un premier sens et un second sens sur la base d'une orientation du dispositif électronique, le premier sens coupant le second sens à 90 degrés,
lorsqu'une page de saisie de traits, qui est une page affichée dans la zone de visualisation d'édition (541) et permettant de saisir des traits incluant le premier trait, est une page au format à l'italienne qui a une forme rectangulaire longue latéralement, le moyen de traitement (101, 308) est conçu pour ne faire défiler la page que dans le sens latéral, indépendamment du premier sens ou du second sens du sens d'affichage, et
lorsque la page est une page au format à la française qui a une forme rectangulaire longue verticalement, le moyen de traitement (101, 308) est conçu pour ne faire défiler la page que dans un sens vertical, indépendamment du premier sens ou du second sens du sens d'affichage du dispositif d'affichage (17).

6. Procédé comprenant les étapes suivantes :
lorsqu'un premier trait est saisi sur une zone de visualisation d'édition (504) d'un dispositif d'affichage (17), afficher une première zone allongée (801) dans un premier style et afficher une seconde zone (805) dans un deuxième style, différent du premier style, la première zone (801) incluant une zone d'affichage du premier trait et ayant une forme de bande qui est longue dans un sens dans lequel est écrit un caractère manuscrit correspondant au premier trait, la seconde zone (805) étant la zone de la zone de visualisation d'édition (504) autre que la première zone (801) ;
afficher un ou plusieurs premier(s) candidat(s) d'écriture manuscrite sur le dispositif d'affichage (17) en effectuant une recherche dans un dictionnaire de saisie semi-automatique sur la base du premier trait, les premiers candidats d'écriture manuscrite comprenant des mots qui commencent par le caractère correspondant au premier trait ;
introduire, lorsque l'un des premiers candidats d'écriture manuscrite est sélectionné, le mot du premier candidat d'écriture manuscrite sélectionné, à la place du caractère correspondant au premier trait ; et
introduire le premier trait lorsque la seconde zone (805) est utilisée.

7. Procédé selon la revendication 6, comprenant en outre les étapes suivantes :
afficher, lorsqu'un second trait est saisi sur le dispositif d'affichage (17), après que le premier trait a été saisi, un ou plusieurs second(s) candidat(s) d'écriture manuscrite, sur la base du premier trait et du second trait, sur le dispositif d'affichage (17), les seconds candidats d'écriture manuscrite comprenant des mots qui commencent par des caractères correspondant au premier trait et au second trait ; et
agrandir, lorsque les mots du ou des premier(s) candidat(s) d'écriture manuscrite et les mots du ou des second(s) candidat(s) d'écriture manuscrite incluent au moins un mot identique, une zone d'opération permettant de sélectionner le candidat d'écriture manuscrite comprenant le mot identique sur la base du second trait sans changer une position d'affichage du candidat d'écriture manuscrite comprenant le mot identique.

8. Procédé selon la revendication 6, comprenant en outre les étapes suivantes :
afficher, lorsqu'un second trait est saisi sur le dispositif d'affichage (17), après que le premier trait a été saisi, une pluralité de seconds candidats d'écriture manuscrite, sur la base du premier trait et du second trait, sur le dispositif d'affichage (17), les seconds candidats d'écriture manuscrite comprenant des mots qui commencent par des caractères correspondant au premier trait et au second trait ;
afficher, parmi la pluralité de seconds candidats d'écriture manuscrite, des candidats d'écriture manuscrite qui comprennent des mots identiques à des mots du ou des premier(s) candidat(s) d'écriture manuscrite, dans un troisième style, sur le dispositif d'affichage (17) ; et
afficher, parmi la pluralité de seconds candidats d'écriture manuscrite, des candidats d'écriture manuscrite qui comprennent des mots différents de mots du ou des premier(s) candidat(s) d'écriture manuscrite, dans un quatrième style, différent du troisième style, sur le dispositif d'affichage (17).

9. Procédé selon la revendication 6, comprenant en outre les étapes suivantes :
accepter un réglage destiné à un utilisateur droitier ou à un utilisateur gaucher ; et
afficher la ou les première(s) écriture(s) manuscrite(s) sur un côté gauche par rapport à une position du premier trait, dans le cas du réglage destiné à un utilisateur droitier et sur un côté droit par rapport à la position du premier trait, dans le cas du réglage destiné à un utilisateur gaucher.

10. Procédé selon la revendication 6, dans lequel :
le dispositif d'affichage (17) a une forme rectangulaire et est monté sur un dispositif électronique,
faire passer automatiquement un sens d'affichage de l'image d'affichage à au moins un premier sens et un second sens sur la base d'une orientation du dispositif électronique, le premier sens coupant le second sens à 90 degrés ;
lorsqu'une page de saisie de traits, qui est une page affichée dans la zone de visualisation d'édition (541) et permettant de saisir des traits incluant le premier trait, est une page au format à l'italienne qui a une forme rectangulaire longue latéralement, ne permettre à la page de défiler que dans un sens latéral, indépendamment du premier sens ou du second sens du sens d'affichage, et
lorsque la page est une page au format à la française qui a une forme rectangulaire longue verticalement, ne permettre à la page de défiler que dans un sens vertical, indépendamment du premier sens ou du second sens du sens d'affichage.

11. Programme informatique qui est exécutable par un ordinateur, le programme informatique commandant à l'ordinateur d'exécuter le procédé selon la revendication 6.

12. Programme informatique selon la revendication 11, le programme commandant en outre à l'ordinateur d'exécuter les fonctions consistant à :
afficher, lorsqu'un second trait est saisi sur le dispositif d'affichage (17), après que le premier trait a été saisi, un ou plusieurs second(s) candidat(s) d'écriture manuscrite, sur la base du premier trait et du second trait, sur le dispositif d'affichage (17), les seconds candidats d'écriture manuscrite comprenant des mots qui commencent par des caractères correspondant au premier trait et au second trait ; et
agrandir, lorsque les mots du ou des premier (s) candidat(s) d'écriture manuscrite et les mots du ou des second(s) candidat(s) d'écriture manuscrite incluent au moins un mot identique, une zone d'opération permettant de sélectionner le candidat d'écriture manuscrite comprenant le mot identique sur la base du second trait sans changer une position d'affichage du candidat d'écriture manuscrite comprenant le mot identique.

13. Programme informatique selon la revendication 11, le programme commandant en outre à l'ordinateur d'exécuter les fonctions consistant à :
afficher, lorsqu'un second trait est saisi sur le dispositif d'affichage (17), après que le premier trait a été saisi, une pluralité de seconds candidats d'écriture manuscrite, sur la base du premier trait et du second trait, sur le dispositif d'affichage (17), les seconds candidats d'écriture manuscrite comprenant des mots qui commencent par des caractères correspondant au premier trait et au second trait ;
afficher, parmi la pluralité de seconds candidats d'écriture manuscrite, des candidats d'écriture manuscrite qui comprennent des mots identiques à des mots du ou des premier(s) candidat(s) d'écriture manuscrite, dans un troisième style, sur le dispositif d'affichage (17) ; et
afficher, parmi la pluralité de seconds candidats d'écriture manuscrite, des candidats d'écriture manuscrite qui comprennent des mots différents de mots du ou des premier(s) candidat(s) d'écriture manuscrite, dans un quatrième style, différent du troisième style, sur le dispositif d'affichage (17).

14. Programme informatique selon la revendication 11, le programme commandant en outre à l'ordinateur d'exécuter les fonctions consistant à :
accepter un réglage destiné à un utilisateur droitier ou à un utilisateur gaucher ; et
afficher la ou les première(s) écriture(s) manuscrite(s) sur un côté gauche par rapport à une position du premier trait, dans le cas du réglage destiné à un utilisateur droitier et sur un côté droit par rapport à la position du premier trait, dans le cas du réglage destiné à un utilisateur gaucher.

15. Programme informatique selon la revendication 11, dans lequel :
le dispositif d'affichage (17) a une forme rectangulaire et est monté sur un dispositif électronique, et
le programme commande en outre à l'ordinateur d'exécuter les fonctions consistant à :
faire passer automatiquement un sens d'affichage de l'image d'affichage à au moins un premier sens et un second sens sur la base d'une orientation du dispositif électronique, le premier sens coupant le second sens à 90 degrés ;
lorsqu'une page de saisie de traits, qui est une page affichée dans la zone de visualisation d'édition (541) et permettant de saisir des traits incluant le premier trait, est une page au format à l'italienne qui a une forme rectangulaire longue latéralement, ne permettre à la page de défiler que dans un sens latéral, indépendamment du premier sens ou du second sens du sens d'affichage, et
lorsque la page est une page au format à la française qui a une forme rectangulaire longue verticalement, ne permettre à la page de défiler que dans un sens vertical, indépendamment du premier sens ou du second sens du sens d'affichage.
